(19) Europäisches Patentamt
European Patent Office
Office européen des brevets

(11) EP 2 213 703 B1

(12) **EUROPEAN PATENT SPECIFICATION**

(45) Date of publication and mention of the grant of the patent:
**16.05.2018 Bulletin 2018/20**

(21) Application number: **08840699.6**

(22) Date of filing: **15.10.2008**

(51) Int Cl.:
***C08L 69/00*** *(2006.01)* ***C08K 3/34*** *(2006.01)*
***C08K 5/521*** *(2006.01)* ***C08L 67/04*** *(2006.01)*
***C08L 101/16*** *(2006.01)*

(86) International application number:
**PCT/JP2008/069072**

(87) International publication number:
**WO 2009/051264 (23.04.2009 Gazette 2009/17)**

(54) **AROMATIC POLYCARBONATE RESIN COMPOSITION**

AROMATISCHES POLYCARBONAT ENTHALTENDE HARZZUSAMMENSETZUNG

COMPOSITION DE RÉSINE DE POLYCARBONATE AROMATIQUE

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **16.10.2007 JP 2007268965**

(43) Date of publication of application:
**04.08.2010 Bulletin 2010/31**

(73) Proprietor: **Teijin Limited**
**Osaka-shi, Osaka 530-0005 (JP)**

(72) Inventors:
- **MATSUNO, Yuichi**
**Tokyo 100-0013 (JP)**
- **KONDO, Fumitaka**
**Tokyo 100-0013 (JP)**
- **TOYOHARA, Kiyotsuna**
**Iwakuni-shi**
**Yamaguchi 740-0014 (JP)**

(74) Representative: **Beckmann, Claus et al**
**Kraus & Weisert**
**Patentanwälte PartGmbB**
**Thomas-Wimmer-Ring 15**
**80539 München (DE)**

(56) References cited:
**WO-A1-2007/083820** **WO-A1-2008/102919**
**JP-A- 2006 241 209** **JP-A- 2007 056 246**
**JP-A- 2007 191 577** **JP-A- 2007 191 630**
**JP-A- 2008 255 214**

Remarks:
The file contains technical information submitted after the application was filed and not included in this specification

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

Technical Field

This invention relates to a resin composition that contains a polymer obtained from biomass and that gives a molded article excellent in heat resistance, mechanical properties and durability/stability. More specifically, it relates to a resin composition that is obtained by incorporating a specific polylactic acid to an aromatic polycarbonate and that gives a molded article excellent in heat resistance, mechanical properties and hydrolysis resistance, and a process for the production thereof.

Background Art

An aromatic polycarbonate has excellent heat resistance, mechanical properties, impact resistance and dimensional stability, and is widely used in the fields of office equipment or machines, automobiles, electric/electronic parts, etc. However, the aromatic polycarbonate has an aspect in which its raw material is mostly dependent upon oil resources.

In recent years, due to concern of depletion of oil resources and the problem of carbon dioxide that causes global warming by its increase in the air, great attention is focused on biomass resources that are not dependent upon oil and that hold "carbon neutral" in which they keep carbon dioxide from increasing when combusted. And, in the fields of polymers, biomass plastics to be produced from biomass resources are actively developed.

A typical example of the biomass plastics is polylactic acid, and of the biomass plastics, it has relatively high heat resistance and mechanical properties. Its use is hence developing in the fields of the dishes, packaging materials, groceries, etc., while its possibilities as industrial materials are now under study.

However, polylactic acid is poor in mechanical properties, heat resistance, etc., when it is to be used as an industrial material in the fields where an aromatic polycarbonate is used. Further, polylactic acid has biodegradability and has very low hydrolysis resistance against its use under wet heat conditions, and its use has not been developed.

Further, polylactic acid has optical isomers, and it is known that when poly-L-lactic acid and poly-D-lactic acid which are polymers of L-lactic acid and D-lactic acid, respectively, are mixed, they form a stereo-complex crystal to be a material that exhibits a higher melting point than a crystal formed of individual poly-L-lactic acid or individual poly-D-lactic acid (see Patent Document 1, Non-Patent Document 1). An attempt is made to apply the above stereo-complex polylactic acid to the industrial use for automobile parts, household electric appliances, etc., by utilizing its heat resistance (see Patent Document 2).

However, when a stereo-complex polylactic acid is produced by an industrially advantageous melt-extrusion process, it is very difficult to fully proceed with the formation of a stereo-complex, and the good heat resistance that it characteristically has is not exhibited. Further, while stereo-complex polylactic acid tends to have a higher crystallization speed than poly-L-lactic acid or poly-D-lactic acid, it is still insufficient for efficiently producing stereo-complex polylactic acid by injection molding.

Under the circumstances, with regard to plastic of which the raw material depends on oil, the activity of introducing biomass plastic partly is on the increase as a means of decreasing its environmental burden. With regard to an aromatic polycarbonate, it is also proposed to incorporate natural polymers such as corn starch (see Patent Document 3), and there is proposed a composition containing polylactic acid in combination (see Patent Documents 4 to 6).

With regard to polylactic acid, further, an attempt is made to use it as an industrial material by introducing a resin such as an aromatic polycarbonate and a flame retardant (see Patent Document 7).

In any one of these cases, however, there has not been overcome the problem such as decrease in hydrolysis resistance derived from the nature of polylactic acid itself when the polylactic acid is to be used as an industrial material, which is a bar against development of the use thereof at present.

JP 2007 191630 A relates to the problem to provide a polylactic acid composition excellent in stereospecificity, crystallinity, moldability and mechanical properties, and to provide a method for producing the same. As a solution to the problem, the document describes a polylactic acid composition which comprises polylactic acid and a crystallization promoter and is 80% or greater in the stereospecificity (S) represented by the formula: $S= [\Delta H_{ms}/(\Delta H_{ms}+\Delta H_{mh})]*100$ (wherein $\Delta H_{ms}$ (J/g) is enthalpy of crystal fusion at 190 °C or higher determined by differential scanning calorimetry, and $\Delta H_{mh}$ (J/g) is enthalpy of crystallization at 190 °C or lower). The method for producing the polylactic acid composition is also provided.

WO 2008/102919 A1 describes a polylactic acid composition which is said to be excellent in crystallinity, wet heat stability and melt stability. Also described is a molded article which is made from a polylactic acid composition and is said to have excellent appearance and color tone. Specifically described is a composition containing a polylactic acid (component A), a carbodiimide compound (component B) and a metal phosphate salt (component C). Also describes is a molded article of such a composition.

WO 2007/083820 A1 describes a molded article which is said to be excellent in heat resistance, mechanical characteristics, hydrolysis resistance and chemical resistance. Also described is a resin composition containing a polylactic acid which can be a raw material for such a molded article. Specifically described is a resin composition containing a polylactic acid which is characterized as follows: (i) the polylactic acid is composed of poly-L-lactic acid (component B-1) and poly-D-lactic acid (component B-4); (ii) the weight ratio between the component B-1 and the component B-4 (component B-1/component B-4) is within the range from 10/90 to 90/10; and (iii) the ratio of the melting peak not less than 195 °C is not less than 20% in the overall melting peak in the temperature-rising process as measured by a differential scanning calorimeter (DSC). Also described are a molded article of such a resin composition and respective methods for producing such resin composition and molded article.

(Patent Document 1) JP-A 63-241024
(Patent Document 2) Japanese Patent No. 3583097
(Patent Document 3) JP-A 7-506863
(Patent Document 4) Japanese Patent No. 3279768
(Patent Document 5) JP-A 2005-48066
(Patent Document 6) JP-A 2005-48067
(Patent Document 7) JP-A 2004-190026
(Non-Patent Document 1) Macromolecules, 24, 5651(1991)

Disclosure of the Invention

It is therefore an object of this invention to provide an aromatic polycarbonate resin composition that contains a polymer obtained from biomass resources and that gives a molded article excellent in heat resistance, mechanical properties and durability/stability.

For achieving the above object, the present inventors have made diligent studies and, as a result, have found that a molded article formed from a resin composition prepared by incorporating a polylactic acid (component B), phosphoric ester metal salt (component C) and a terminal blocker (component F) into an aromatic polycarbonate (component A) is excellent in heat resistance, mechanical properties and hydrolysis resistance, and the present invention has been thus completed.

That is, this invention provides a resin composition comprising

(i) a resin component containing 95 to 5 % by weight of an aromatic polycarbonate (component A) and 5 to 95 % by weight of polylactic acid (component B),
(ii) 0.001 to 10 parts by weight, per 100 parts by weight of the resin component, of a phosphoric ester metal salt (component C), and
(iii) 0.01 to 5 parts by weight, per 100 parts by weight of the polylactic acid (component B), of a terminal blocker (component F),
(iv) 0.05 to 50 parts by weight, per 100 parts by weight of the resin component of resorcinol bis(dixylenyl phosphate) (component I),

the stereo-complex crystal content (X) of the following expression (I) being 80 % or more,

$$X\ (\%) = \{\Delta Hb/(\Delta Ha + \Delta Hb)\} \times 100 \qquad (I)$$

wherein $\Delta Ha$ and $\Delta Hb$ are a melting enthalpy ($\Delta Ha$) of a crystal melting point that appears at lower than 190°C and a melting enthalpy ($\Delta Hb$) of a crystal melting point that appears at 190°C or higher but less than 250°C, respectively, in a temperature-elevation process by a differential scanning calorimeter (DSC).

Further, this invention includes a process for producing the above resin composition, which comprises the steps of (i) mixing polylactic acid composed mainly of L-lactic acid (component B-1), polylactic acid composed mainly of D-lactic acid (component B-2) and a phosphoric ester metal salt (component C) and heating the mixture, and
(ii) mixing the thus-obtained mixture, an aromatic polycarbonate (component A) and a terminal blocker (component F) and a resorcinol bis(dixylenyl phosphate) (component I).

Further, this invention includes a molded article formed of the above resin composition.

Brief Explanation of Drawings

Fig. 1 is a schematic surface perspective view of each of large-scale molded articles (outer dimensions: 500 mm high, 600 mm wide and 2.5 mm thick) produced in Examples.

Explanations of letters or notations

1. Molded article body
2. Pin side gate (width of side gate portion 5 mm, thickness of gate 1.2 mm, length of gate land 6 mm, tab of side gate: 8 mm wide x 15 mm long, diameter of pin gate to tab portion 1.8 mm).
3. Position for taking a sample for measurements of a stereo-complex crystal content, chemical resistance and hydrolysis resistance.

Best Modes for Carrying Out the Invention

The components of the resin composition of this invention, their contents and preparation methods therefor will be explained one by one below.

<Component A>

The component A in the resin composition of this invention is an aromatic polycarbonate. A typical aromatic polycarbonate (to be sometimes simply referred to as "polycarbonate" hereinafter) is obtained by reacting a dihydric phenol and a carbonate precursor. The reaction method includes an interfacial polycondensation method, a molten ester exchange method, a method of solid phase ester exchange of a carbonate prepolymer and a method of ring-opening polymerization of a cyclic carbonate compound.

Specific examples of the above dihydric phenol include hydroquinone, resorcinol, 4,4'-biphenol, 1,1-bis(4-hydroxyphenyl)ethane, 2,2-bis(4-hydroxyphenyl)propane (generally called "bisphenol A"), 2,2-bis(4-hydroxy-3-methylphenyl)propane, 2,2-bis(4-hydroxyphenyl)butane, 1,1-bis(4-hydroxyphenyl)-1-phenylethane, 1,1-bis(4-hydroxyphenyl)cyclohexane, 1,1-bis(4-hydroxyphenyl)-3,3,5-trimethylcyclohexane, 2,2-bis(4-hydroxyphenyl)pentane, 4,4'-(p-phenylenediisopropylidene)diphenol, 4,4'-(m-phenylenediisopropylidene)diphenol, 1,1-bis(4-hydroxyphenyl)-4-isopropylcyclohexane, bis(4-hydroxyphenyl)oxide, bis(4-hydroxyphenyl)sulfide, bis(4-hydroxyphenyl)sulfoxide, bis(4-hydroxyphenyl)sulfone, bis(4-hydroxyphenyl)ketone, bis(4-hydroxyphenyl)ester, 2,2-bis(3,5-dibromo-4-hydroxyphenyl)propane, bis(3,5-dibromo-4-hydroxyphenyl)sulfone, bis(4-hydroxy-3-methylphenyl)sulfide, 9,9-bis(4-hydroxyphenyl)fluorene, 9,9-bis(4-hydroxy-3-methylphenyl)fluorene, etc. Of these, bis(4-hydroxyphenyl)alkanes are preferred, and in particular bisphenol A (to be sometimes referred to as "BPA" hereinafter) is preferred.

Besides the bisphenol A type polycarbonates that are generally used polycarbonates, special polycarbonates produced by the use of other dihydric phenols may be used as a component A in this invention.

For example, polycarbonates (homopolymers or copolymers) obtained by using, as part or the whole of the dihydric phenol component, 4,4'-(m-phenylenediisopropylidene)diphenol (to be sometimes referred to as "BPM" hereinafter), 1,1-bis(4-hydroxyphenyl)cyclohexane, 1,1-bis(4-hydroxyphenyl)-3,3,5-trimethylcyclohexne (to be sometimes referred to as "Bis-TMC" hereinafter), 9,9-bis(4-hydroxyphenyl)fluorene and 9,9-bis(4-hydroxy-3-methylphenyl)fluorene (to be sometimes referred to as "BCF" hereinafter) are suitable for use in fields having in particular severe demands for being free of dimensional changes by water absorption or being stable in form. The dihydric phenols other than BPA are preferably used in an amount of 5 mol% or more, and particularly preferably used in an amount of 10 mol% or more, based on the whole of the dihydric phenol component constituting the above polycarbonate.

In particular, when high rigidity and excellent hydrolysis resistance are required, the component A constituting the resin composition is preferably any one of the following copolycarbonates (1) to (3).

(1) A copolycarbonate in which, per 100 mol% of the dihydric phenol component constituting the polycarbonate, the content of BPM is 20 to 80 mol% (more preferably 40 to 75 mol%, still more preferably 45 to 65 mol%) and the content of BCF is 20 to 80 mol% (more preferably 25 to 60 mol%, still more preferably 35 to 55 mol%).
(2) A copolycarbonate in which, per 100 mol% of the dihydric phenol component constituting the polycarbonate, the content of BPA is 10 to 95 mol% (more preferably 50 to 90 mol%, still more preferably 60 to 85 mol%) and the content of BCF is 5 to 90 mol% (more preferably 10 to 50 mol%, still more preferably 15 to 40 mol%).
(3) A copolycarbonate in which, per 100 mol% of the dihydric phenol component constituting the polycarbonate, the content of BPM is 20 to 80 mol% (more preferably 40 to 75 mol%, still more preferably 45 to 65 mol%) and the

content of Bis-TMC is 20 to 80 mol% (more preferably 25 to 60 mol%, still more preferably 35 to 55 mol%).

These special polycarbonates may be used singly or as a mixture of two or more of them. These may be also used as a mixture thereof with a generally used bisphenol A type polycarbonate.

Production methods and properties of these special polycarbonates are described in detail, for example, in JP-A 6-172508, JP-A 8-27370, JP-A 2001-55435 and JP-A 2002-117580.

Of the above various polycarbonates, those polycarbonates which are imparted with a water absorption and a Tg (glass transition temperature) in the following ranges by adjusting each copolymer composition, etc., have excellent hydrolysis resistance as polymers per se, and are also remarkably excellent in a low-distortion property after molding, so that they are in particular suitable for use fields that require stability in form.

(i) A polycarbonate having a water absorption of 0.05 to 0.15 % by weight, preferably 0.06 to 0.13 % by weight and a Tg of 120 to 180°C, or

(ii) a polycarbonate having a Tg of 160 to 250°C, preferably 170 to 230°C and a water absorption of 0.10 to 0.30 % by weight, preferably 0.13 to 0.30 % by weight, more preferably 0.14 to 0.27 % by weight.

The above water absorption of a polycarbonate is a value obtained by employing a disc-shaped test piece having a diameter of 45 mm and a thickness of 3.0 mm and measuring its water content after its immersion in water at 23°C for 24 hours according to ISO62-1980. Further, the above Tg (glass transition temperature) is a value determined by measurement with a differential scanning calorimeter (DSC) according to JIS K7121.

On the other hand, as the carbonate precursor, carbonyl halide, carbonate ester, haloformate, or the like is used, and the carbonate precursor specifically includes phosgene, diphenyl carbonate, dihaloformate of dihydric phenol, etc.

When a polycarbonate is produced from the above dihydric phenol and carbonate precursor by an interfacial polymerization method, a catalyst, a terminal blocker, an anti-oxidant for preventing the oxidation of the dihydric phenol, etc., may be used as required. Further, the polycarbonate may be a branched polycarbonate obtained by copolymerization with a trifunctional or higher polyfunctional aromatic compound. The above trifunctional or higher polyfunctional aromatic compound includes 1,1,1-tris(4-hydroxyphenyl)ethane, 1,1,1-tris(3,5-dimethyl-4-hydroxyphenyl)ethane.

When a polyfunctional compound that generates a branched polycarbonate is contained, the content thereof based on the entire amount of the polycarbonate is preferably 0.001 to 1 mol%, more preferably 0.005 to 0.9 mol%, still more preferably 0.01 to 0.8 mol%. In particular, when a molten ester exchange method is employed, a branched structure is sometimes generated by way of a side reaction, and the content of the branched structure based on the entire amount of the polycarbonate is preferably 0.001 to 1 mol%, more preferably 0.005 to 0.9 mol%, still more preferably 0.01 to 0.8 mol%. The proportion of the above branched structure can be calculated on the basis of $^1$H-NMR measurement.

Further, the aromatic polycarbonate as a component A in the resin composition of this invention may be a polyester carbonate obtained by copolymerization with a difunctional aromatic or aliphatic (including "alicyclic") carboxylic acid, a copolycarbonate obtained by copolymerization with a dihydric alcohol (including "alicyclic"), and a polyester carbonate obtained by copolymerization with both of the above difunctional carboxylic acid and dihydric alcohol. Further, the above polycarbonate may be a blend of two or more polycarbonates obtained.

The above aliphatic difunctional carboxylic acid is preferably $\alpha,\omega$-dicarboxylic acid. Examples of the aliphatic difunctional carboxylic acid preferably include linear saturated aliphatic dicarboxylic acids such as sebacic acid (decanedioic acid), dodecanedioic acid, tetradecanedioic acid, octadecanedioic acid and eicosanedioic acid, and alicyclic dicarboxylic acids such as cyclohexanedicarboxylic acid. The dihydric alcohol is more preferably an alicyclic diol, and examples thereof include cyclohexanedimethanol, cyclohexanediol, tricyclodecanedimethanol, etc.

In this invention, further, a polycarbonate-polyorganosiloxane copolymer obtained by copolymerization with a polyorganosiloxane unit can be also used as a component A.

The aromatic polycarbonate as a component A may be a mixture containing two or more of various polycarbonates such as the above polycarbonate obtained by the use of different dihydric phenols, polycarbonate having a branch component, polyester carbonate, polycarbonate-polyorganosiloxane copolymer, etc. Further, a mixture containing two or more of polycarbonates produced by different production methods, polycarbonates having different terminal blockers, etc., may be used.

The reaction schemes of the interfacial polymerization method, the molten ester exchange method, the method of solid phase ester exchange of a carbonate prepolymer, the method of ring-opening polymerization of a cyclic carbonate compound, etc., which are methods for producing polycarbonate resins are well-known methods in various documents and patent publications.

The viscosity average molecular weight of the aromatic polycarbonate as a component A is not limited. However, when the above viscosity average molecular weight is less than 10,000, the strength, etc., decrease, and when it exceeds 50,000, the properties of molding-processing decrease. It is hence preferably in the range of 10,000 to 50,000, more

preferably in the range of 12,000 to 30,000, still more preferably in the range of 14,000 to 28,000. In this case, a polycarbonate having a viscosity average molecular weight outside the above range can be used so long as the moldability, etc., are maintained. For example, a high-molecular weight polycarbonate component having a viscosity average molecular weight of over 50,000 can be incorporated.

The viscosity average molecular weight (M) in this invention is determined by first determining a specific viscosity($\eta_{sp}$) calculated on the basis of the following expression from a solution of 0.7 g of an aromatic polycarbonate in 100 ml of methylene chloride at 20°C with an Ostwald viscometer,

$$\text{Specific viscosity } (\eta_{sp}) = (t - t_0)/t_0$$

[in which $t_0$ is the number of seconds that methylene chloride takes to fall, and t is the number of seconds that a sample solution takes to fall],
and calculating the viscosity average molecular weight (M) on the basis of the following expression from the above-determined specific viscosity ($\eta_{sp}$).

$$\eta_{sp}/c = [\eta] + 0.45 \times [\eta]^2 c$$

(in which [η] is an intrinsic viscosity.)

$[\eta] = 1.23 \times 10^{-4} M^{0.83}$
c = 0.7

As the aromatic polycarbonate that is a component A in this invention, a reclaimed aromatic polycarbonate can be used as well. In that case, the content of the component having a low environmental burden increases together with the component B that is a material independent of oil resources, and it is a material which is more preferred for decreasing an environmental burden. The reclaimed aromatic polycarbonate refers to a resin that is recovered at least from a resin molded article obtained by a processing step for producing an intended commercial product without going through the step of decomposing a polymer. For example, it includes resin molded articles separated and recovered from used products, resin molded articles separated and recovered from defective products generated during the production of products and resin molded articles of unnecessary portions generated in a sprue/runner, etc., during molding and processing. The above decomposing step refers to the step that is intended for decomposing bonds forming a main chain of an aromatic polycarbonate and recovering a monomer or an oligomer formed by the decomposition, and it does not mean a thermal decomposition in the steps for kneading, pulverizing and processing.

A reclaimed aromatic polycarbonate having an aromatic polycarbonate component content, per 100 % by weight of the resin material thereof, of 90 % by weight or more is preferably used, and the content of an aromatic polycarbonate component is more preferably 95 % by weight or more, still more preferably 98 % by weight or more.

The used products preferably include various glazing materials such as a sound-proof wall, a glass-paned window, a translucent roof material and an automobile sunroof, transparent materials such as a windshield or a automobile headlight lens, containers such as a water bottle, and optical storage medium. These in no case contain a large amount of additives or other resins, and the intended product qualities are easily obtainable. In particular, a molded article obtained by laminating a hard-coating layer on a transparent polycarbonate resin molded product can be an example of a preferred embodiment. It is because such a molded article is in many cases colored due to an influence of a hard-coating layer while it has good transparency. Specific examples of this molded article include various glazing materials and transparent members such as a windshield or an automobile headlight lens.

As the reclaimed aromatic polycarbonate, any one of a pulverization product of the above used resin molded articles that are no longer necessary and pellets produced by melt-extruding the pulverization product can be used. Further, when a resin molded article is any one of those to which printed coating, sealing, labeling, decorative coating, conductive coating, conductive plating, metallizing, etc., are applied, any one of a pulverization product from which such portions are removed (any one of pulverization after removal and removal after pulverization will do) and pellets produced by melt-re-extruding the pulverization product can be used. When printed coating, etc., are contained, a resin composition is easily colored due to their influences, and the effect of this invention is not fully exhibited. It is hence preferred in this invention to remove such a printed coating, and the like. The method for removing a printed coating, plating, etc., includes a method of rolling between two rolls, a method of bringing them into contact with hot power water, various solvents or an acid or alkali aqueous solution, a method of mechanically removing the above portions to be removed, a method of applying ultrasonic wave and a method of abrasive blasting. These methods can be used in combination.

On the other hand, a molded article formed by laminating a hard-coating layer on the surface of a transparent polycarbonate molded article can attain an excellent hue, so that it is more efficient to incorporate a pulverization product thereof as it is, which also contributes to a decrease in an environmental burden. The pulverization product can be produced by pulverizing a resin molded article with a known pulverizer.
The content of the reclaimed aromatic polycarbonate in an amount of 100 % by weight of the aromatic polycarbonate as a component A is preferably 5 % by weight or more, more preferably 10 % by weight or more, still more preferably 15 % by weight or more. Although the upper limit thereof can be 100 % by weight, preferably, it is practically 50 % by weight or less, and in this case a resin composition having stabilized properties can be obtained.

<Component B>

The component B in the resin composition of this invention is a polylactic acid containing L-lactic acid unit and D-lactic acid unit as basic constituting components, represented by the following formula (3).

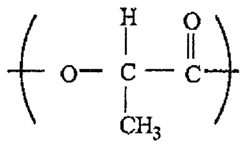

(3)

The polylactic acid (component B) in the resin composition of this invention contains polylactic acid (component B-1) composed mainly of L-lactic acid unit and polylactic acid (component B-2) composed mainly of D-lactic acid unit.
The component B-1 is a polylactic acid composed mainly of L-lactic acid unit and is composed of 90 to 100 mol% of L-lactic acid unit and 0 to 10 mol% of D-lactic acid unit and/or copolymer component other than lactic acid. The component B-1 is preferably composed of 90 to 99 mol% of L-lactic acid unit and 1 to 10 mol% of D-lactic acid unit and/or copolymer component other than lactic acid. It is more preferably composed of 92 to 99 mol% of L-lactic acid unit and 1 to 8 mol% of D-lactic acid unit and/or copolymer component other than lactic acid.
The component B-2 is a polylactic acid composed mainly of D-lactic acid unit and is composed of 90 to 100 mol% of D-lactic acid unit and 0 to 10 mol% of L-lactic acid unit and/or copolymer component other than lactic acid. The component B-2 is preferably composed of 90 to 99 mol% of D-lactic acid unit and 1 to 10 mol% of L-lactic acid unit and/or copolymer component other than lactic acid. It is more preferably composed of 92 to 99 mol% of D-lactic acid unit and 1 to 8 mol% of L-lactic acid unit and/or copolymer component other than lactic acid.
In the polylactic acid (component B) in this invention, the weight ratio (B-1/B-2) of the polylactic acid (component B-1) composed mainly of L-lactic acid unit and the polylactic acid (component B-2) composed mainly of D-lactic acid unit is 10/90 to 90/10. For forming more stereo-complexes, the weight ratio (B-1/B-2) is preferably 25/75 to 75/25, more preferably 40/60 to 60/40. When the weight ratio of one of the polymers is less than 10 or over 90, undesirably, homocrystallization takes first, and it is difficult to form stereo-complexes.
As the copolymer component unit other than lactic acid in each of the components B-1 and B-2 of the polylactic acid (component B), units derived from dicarboxylic acid having two or more functional groups capable of forming an ester bond, polyhydric alcohol, hydroxycarboxylic acid, lactone, etc., and units derived from various polyesters, various polyethers, various polycarbonates, etc., composed of the above constituting components, can be used singly or as mixtures.
The dicarboxylic acid includes succinic acid, adipic acid, azelaic acid, sebacic acid, terephthalic acid, isophthalic acid, etc. The polyhydric alcohol includes aliphatic polyhydric alcohols such as ethylene glycol, propylene glycol, butanediol, pentanediol, hexanediol, octanediol, glycerin, sorbitan, neopentyl glycol, diethylene glycol, triethylene glycol, polyethylene glycol, polypropylene glycol, etc. Further, it also includes aromatic polyhydric alcohols such as an adduct of bisphenol with ethylene oxide. The hydroxycarboxylic acid includes glycolic acid, hydroxybutylcarboxylic acid, etc. The lactone includes glycollide, ε-caprolactone glycollide, ε-caprolactone, β-propiolactone, δ-butyrolactone, β- or γ-butyrolactone, pivalolactone, δ-valerolactone, etc.
The weight average molecular weight of the polylactic acid (component B) is preferably 120,000 or more, more preferably 120,000 to 500,000, still more preferably 120,000 to 300,000. The weight average molecular weight refers to a weight average molecular weight value in terms of standard polystyrene by gel permeation chromatography (GPC) using chloroform as an eluting liquid.
In the resin component containing the aromatic polycarbonate (component A) and the polylactic acid (component B), the content of the aromatic polycarbonate (component A) is 5 to 95 % by weight, and the content of the polylactic acid (component B) is 95 to 5 % by weight.
When the resin component contains the aromatic polycarbonate (component A) in an amount equal to, or larger than the polylactic acid (component B), the content of the aromatic polycarbonate (component A) is 50 to 95 % by weight,

preferably 50 to 90 % by weight, more preferably 50 to 80 % by weight, still more preferably 50 to 75 % by weight. The content of the polylactic acid (component B) is 5 to 50 % by weight, preferably 10 to 50 % by weight, more preferably 20 to 50 % by weight, still more preferably 25 to 50 % by weight. When the content of the aromatic polycarbonate (component A) is larger than the content of the polylactic acid (component B), advantageously, high hydrolysis resistance can be easily obtained.

When the resin component has a larger content of the polylactic acid (component B) than that of the aromatic polycarbonate (component A), the content of the aromatic polycarbonate (component A) is 5 % by weight or more but less than 50 % by weight, preferably 10 % by weight or more but less than 50 % by weight, more preferably 20 % by weight or more but less than 50 % by weight, still more preferably 25 % by weight or more but less than 50 % by weight. The content of the polylactic acid (component B) is over 50 % by weight but 95 % by weight or less, preferably over 50 % by weight but 90 % by weight or less, more preferably over 50 % by weight but 80 % by weight or less, still more preferably over 50 % by weight but 75 % by weight or less. When the content of the polylactic acid (component B) is larger than that of the aromatic polycarbonate (component A), advantageously, high heat resistance can be obtained when glass fibers are added, and there can be produced a high effect on the decrease of an environmental burden.

<Method for preparing polylactic acid (component B)>

The polylactic acids (B-1, B-2) constituting the polylactic acid (component B) in the resin composition of this invention can be prepared by any known polymerization method of polylactic acid. For example, they can be prepared by ring-opening polymerization of lactide, dehydrative condensation of lactic acid, a method in which these are combined with solid phase polymerization, etc.

When the polylactic acids (B-1, B-2) are prepared by any known polymerization method, there is sometimes formed a lactide that is a cyclic dimer of lactic acid, as a side product. Each of the polylactic acids may contain the above lactide so long as the thermal stability of the resin is not impaired. After completion of polymerization of the polylactic acids, the lactide contained in the polylactic acids is removed from the polylactic acids by a removal method under reduced pressure in a molten state, a removal method by extraction with a solvent, etc., which is preferred for improving the thermal stability of the resin. The content of the lactide contained in the polylactic acids is 2 % or less, preferably 1 % or less, more preferably 0.5 % or less, based on the polylactic acids.

The polylactic acids (B-1, B-2) constituting the polylactic acid (component B) may contain a polymerization-related catalyst so long as it does not impair the thermal stability of the resin. The above catalyst includes various tin compounds, aluminum compounds, titanium compounds, zirconium compounds, calcium compounds, organic acids, inorganic acids, etc. Those catalysts include aliphatic acid salts, carbonates, sulfates, phosphates, hydroxides, halides and alcohlates of tin, aluminum, zirconium and titanium and these metals per se. Specifically, the catalyst includes tin octylate, aluminum acetylacetate, aluminum alkoxide, titanium alkoxide and zirconium alkoxide.

The polymerization-related catalyst contained in the above polylactic acids (B-1, B-2) is removed or deactivated after completion of polymerizing reaction of each polylactic acid by a removal method of extraction with a solvent or a method of making co-present a known stabilizer that inactivates the catalyst, which is preferred for improving the thermal stability of the resin. Above all, it is particularly preferred to inactivate the catalyst with a deactivator. This deactivator is not specially limited so long as it is a deactivator that is generally used as a deactivator for a polymerization catalyst for a polyester resin, while it is preferably a phosphono fatty acid ester of the following general formula (6).

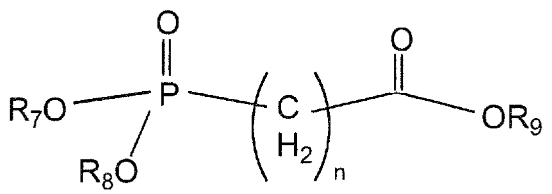

(6)

In the above formula, each of $R_7$ to $R_9$ is independently an alkyl group having 1 to 20 carbon atoms or an aryl group having 6 to 12 carbon atoms. The alkyl group includes ethyl, propyl, butyl, pentyl, hexyl group, etc. The aryl group includes phenyl, naphthalene-yl group. Each of $R_7$ to $R_9$ may be all the same or may be different from each other. Further, n is an integer of 1 to 3.

The compound represented by the formula (6) preferably includes ethyl diethylphosphonoacetate, ethyl di-n-propylphosphonoacetate, ethyl di-n-butylphosphonoacetate, ethyl di-n-hexylphosphonoacetate, ethyl di-n-octylphosphonoacetate, ethyl di-n-decylphosphonoacetate, ethyl di-n-dodecylphosphonoacetate, ethyl di-n-octadecylphosphonoacetate, ethyl diphenylphosphonoacetate, decyl diethylphosphonoacetate, diethyl dodecylphosphonoacetate, octadecyl diethylphosphonoacetate, ethyl diethylphosphonopropionate, ethyl di-n-propylphosphonopropionate,

ethyl di-n-butylphosphonopropionate, ethyl di-n-hexylphosphonopropionate, ethyl di-n-octylphosphonopropionate, ethyl di-n-decylphosphonopropionate, ethyl di-n-dodecylphosphnopropionate, ethyl di-n-octadecylpohsphonopropionate, ethyl diphenylphosphonopropionate, decyl diethylphosphonopropionate, dodecyl diethylphosphonopropionate, octadecyl diethylphosphonopropionate, ethyl diethylphosphonobutyrate, ethyl di-n-propylphosphonobutyrate, ethyl di-n-butylphosphonobutyrate, ethyl di-n-hexylphosphonobutyrate, ethyl di-n-octylphosphonobutyrate, ethyl di-n-decylphosphonobutyrate, ethyl di-n-dodecylphosphonobutyrate, ethyl di-n-octadecylphosphonobutyrate, ethyl diphenylphosphonobutyrate, decyl diethylphosphonobutyrate, dodecyl diethylphosphonobutyrate and octadecyl diethylphosphonobutyrate. In view of an effect and an easiness in handling, ethyl diethylphosphonoacetate, ethyl di-n-propylphosphonoacetate, ethyl di-n-butylphosphonoacetate, ethyl di-n-hexylphosphonoacetate, decyl diethylphosphonoacetate and octadecyl diethylphosphonoacetate are preferred.

When the number of carbon atoms of each of $R_7$ to $R_9$ in the formula (6) is 20 or less, the melting point of the phosphono fatty acid ester is lower than the production temperatures of the polylactic acid and the composition, it is hence fully melted and mixed, and the metal polymerization catalyst can be efficiently captured. Further, the phosphono fatty acid ester has an aliphatic hydrocarbon group between a phosphonic diester site and a carboxylic ester site. For efficiently capturing the metal polymerization catalyst in the polylactic acid, n in the formula (6) is preferably an integer of 1 to 3.

The content of the phosphono fatty acid ester per 100 parts by weight of the polylactic acid is preferably 0.001 to 0.5 part by weight, more preferably 0.02 to 0.2 part by weight. When the content of the phosphono fatty acid ester is too small, its efficiency of deactivating a remaining metal polymerization catalyst is very poor, and no sufficient effect is obtained. Further, when the above content is too large, a mold used at time of molding is greatly contaminated. The above polymerization deactivator is preferably added at the end of the polymerization, while it may be added in each process of extrusion and molding as required.

<Component C>

The component C in this invention is a phosphoric ester metal salt of the following formula (1) or (2).

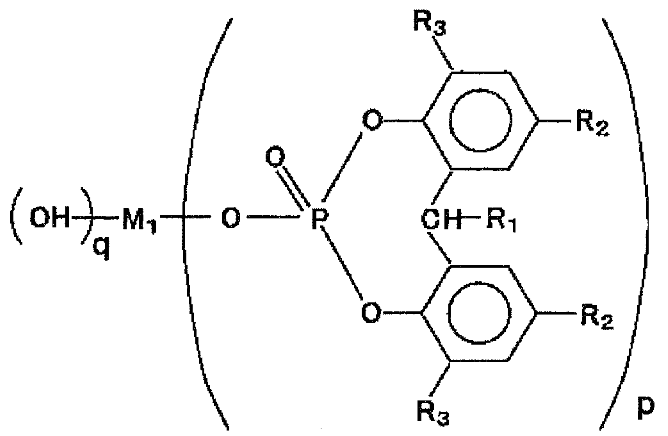

(1)

In the formula (1), $R_1$ is a hydrogen atom or an alkyl group having 1 to 4 carbon atoms. Examples of the alkyl group represented by $R_1$ include methyl, ethyl, n-propyl, iso-propyl, n-butyl, sec-butyl, iso-butyl, tert-butyl group, etc.

In the formula (1), each of $R_2$ and $R_3$ is independently a hydrogen atom or an alkyl group having 1 to 12 carbon atoms. The alkyl group having 1 to 12 carbon atoms includes methyl, ethyl, n-propyl, iso-propyl, n-butyl, sec-butyl, iso-butyl, tert-butyl, amyl, tert-amyl, hexyl, heptyl, octyl, iso-octyl, tert-octyl, 2-ethylhexyl, nonyl, iso-nonyl, decyl, iso-decyl, tert-decyl, undecyl, dodecyl, tert-dodecyl group, etc.

In the formula (1), $M_1$ is an alkali metal atom including Na, K, Li, etc., an alkaline earth metal atom including Mg, Ca, etc., a zinc atom or an aluminum atom. p represents 1 or 2, and q represents 0 when $M_1$ is an alkali metal atom, an alkaline earth metal atom or a zinc atom, or represents 1 or 2 when $M_1$ is an aluminum atom.

The phosphoric ester metal salt of the formula (1) preferably includes, for example, compounds of the formula (1) in which $R_1$ is a hydrogen atom and each of $R_2$ and $R_3$ is tert-butyl group. More specifically, it is preferably a compound of the formula (1) in which $R_1$ is a hydrogen atom, each of $R_2$ and $R_3$ is tert-butyl group, $M_1$ is a sodium atom, p = 1 and q = 0. Further, it is preferably a compound of the formula (1) in which $R_1$ is a hydrogen atom, each of $R_2$ and $R_3$ is tert-butyl group, $M_1$ is a zinc atom, p = 2 and q = 0. Further, it is preferably a compound of the formula (1) in which $R_1$ is a hydrogen atom, each of $R_2$ and $R_3$ is tert-butyl group, $M_1$ is an aluminum atom and either p = 1 and q = 2, or p = 2 and q = 1. Of these compounds, it is particularly preferably sodium 2,2'-methylenebis(4,6-di-tert-butylphenyl)phosphate,

which is represented by the formula (1) in which $R_1$ is a hydrogen atom, each of $R_2$ and $R_3$ is tert-butyl group, $M_1$ is a sodium atom, p = 1 and q = 0. These phosphoric ester metal salts can be synthesized by a known method. As commercially available products of these phosphoric ester metal salts, there are ADK STAB NA-11, NA-21, etc., trade names of ADEKA CORPORATION.

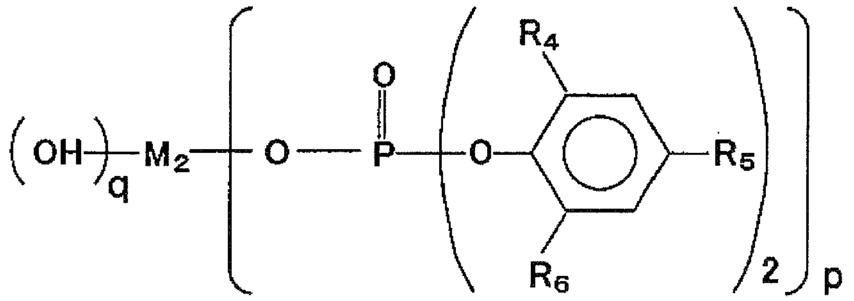

(2)

In the formula (2), each of $R_4$, $R_5$ and $R_6$ is independently a hydrogen atom or an alkyl group having 1 to 12 carbon atoms. The alkyl group having 1 to 12 carbon atoms include methyl, ethyl, n-propyl, iso-propyl, n-butyl, sec-butyl, iso-butyl, tert-butyl, amyl, tert-amyl, hexyl, heptyl, octyl, iso-octyl, tert-octyl, 2-ethylhexyl, nonyl, iso-nonyl, decyl, iso-decyl, tert-decyl, undecyl, dodecyl, tert-dodecyl group, etc.

In the formula (2), $M_2$ is an alkali metal atom including Na, K, Li, etc., an alkaline earth metal atom including Mg, Ca, etc., a zinc atom or an aluminum atom. p represents 1 or 2, and q represents 0 when $M_2$ is an alkali metal atom, an alkaline earth metal atom or a zinc atom, or represents 1 or 2 when $M_2$ is an aluminum atom.

The phosphoric ester metal salt of the formula (2) preferably includes, for example, compounds of the formula (2) in which each of $R_4$ and $R_6$ is a hydrogen atom and $R_5$ is tert-butyl group, or compounds of the formula (2) in which each of $R_4$ and $R_6$ is methyl group and $R_5$ is tert-butyl group. More specifically, it is preferably a compound of the formula (2) in which each of $R_4$ and $R_6$ is a hydrogen atom, $R_5$ is tert-butyl group, $M_2$ is a sodium atom, p = 1 and q = 0. Further, it is a compound of the formula (2) in which each of $R_4$ and $R_6$ is methyl group, $R_5$ is tert-butyl group, $M_2$ is a sodium atom, p = 1 and q = 0. It is preferably a compound of the formula (2) in which each of $R_4$ and $R_6$ is a hydrogen atom, $R_5$ is tert-butyl group, $M_2$ is a zinc atom, p = 2 and q = 0. It is preferably a compound of the formula (2) in which each of $R_4$ and $R_6$ is a hydrogen atom, $R_5$ is tert-butyl group, $M_2$ is an aluminum atom, and either p = 2 and q = 1 or p = 1 and q = 2. Of these compounds, it is particularly preferably sodium bis(4-tert-butylphenyl)phosphate, which is represented by the formula (2) in which each of $R_4$ and $R_6$ is a hydrogen atom, $R_5$ is tert-butyl group, $M_2$ is a sodium, p = 1 and q = 0. These phosphoric ester metal salts can be synthesized by a known method. As commercially available products of these phosphoric ester metal salts, there is ADK STAB NA-10, etc., trade name of ADEKA CORPORATION.

The average particle diameter of the phosphoric ester metal salt (component C) is 0.01 μm or more but less than 10 μm, preferably 0.03 μm or more but less than 9 μm, more preferably 0.05 μm or more but less than 8 μm. When the average particle diameter is in the above range, the crystallization of a stereo-complex crystal efficiently proceeds. As a method for measuring an average particle diameter, for example, a static scattering method using an argon laser or helium laser can be the most practical measuring method.

In the resin composition of this invention, the content of the phosphoric ester metal salt (component C), per 100 parts by weight of the resin composition containing 95 to 5 % by weight of the aromatic polycarbonate (component A) and 5 to 95 % by weight of the polylactic acid (component B), is 0.001 to 10 parts by weight, preferably 0.005 to 7 parts by weight, more preferably 0.01 to 5 parts by weight. When the content of the phosphoric ester metal salt is less than 0.001 part by weight, the content of a stereo-complex crystal does not increase. When the above content exceeds 10 parts by weight, re-aggregation takes place, and its effect as a crystal nucleating agent decreases.

The resin composition of this invention is preferably produced by heat-treating a composition containing a co-presence of polylactic acid (component B-1) composed mainly of L-lactic acid unit, polylactic acid (component B-2) composed mainly of D-lactic acid unit and the phosphoric ester metal salt (component C), and then mixing the composition with the aromatic polycarbonate (component A).

<Component F>

The resin composition of this invention contains a terminal blocker (component F). When contained, the terminal blocker (component F) can improve the resin composition and a molded article thereof in hydrolysis resistance.

The terminal blocker (component F) reacts with some or all of carboxyl group terminals of the polylactic acid (component B) in the resin composition of this invention to work to block them. Examples of the terminal blocker include condensing-reaction type compounds such as an aliphatic alcohol, an amide compound, etc., and addition-reaction type

compounds such as a carbodiimide compound, an epoxy compound, an oxazoline compound, an oxazine compound, an azilidine compound, etc. When the latter addition-reaction type compound is used, it is not required to discharge a superfluous byproduct from a reaction system unlike terminal blocking, for example, by a dehydration-condensing reaction between an alcohol and a carboxyl group. By adding, mixing and reacting the addition-reaction type terminal blocker, therefore, a sufficient carboxyl group terminal blocking effect can be obtained while inhibiting a byproduct from decomposing the resin, and there can be obtained a resin composition and a molded article which have practically sufficient hydrolysis resistance.

Of the terminal blockers (component F) that can be used in this invention, the carbodiimide compound (including a polycarbodiimide compound) can be selected from those which are synthesized by a generally well known method. Examples of the carbodiimide compound include those which can be synthesized by subjecting various polyisocyanates to a decarboxylation-condensing reaction in no solvent or in an inert solvent at a temperature of approximately 70°C or higher in the presence of an organic phosphorus compound or an organic metal compound as a catalyst.

Examples of the monocarbodiimide compound included in the carbodiimide compound include dicyclohexylcarbodiimide, diisopropylcarbodiimide, dimethylcarbodiimide, diisobutylcarbodiimide, dioctylcarbodiimide, t-butylisopropylcarbodiimide, diphenylcarbodiimide, di-t-butylcarbodiimide, di-β-naphthylcarbodiimide, etc. Of these, dicyclohexylcarbodiimide or diisopropylcarbodiimide is preferred in that they are in particular industrially easily available.

Further, the polycarbodiimide compound included in the above carbodiimide compound can be selected from those which are produced by various methods can be used. Basically, it can be selected from those produced by conventional polycarbodiimide production methods (US Patent No. 2941956, JP-B 47-33279, J. Org. Chem. 28, 2069-2075 (1963), Chemical Review 1981, Vol. 81 No. 4, p619-621). In particular, the carbodiimide compound is preferably an aromatic polycarbodiimide compound or an aliphatic polycarbodiimide compound.

Examples of the organic diisocyanate as a synthesis raw material for producing the above polycarbodiimide include an aromatic diisocyanate, an aliphatic diisocyanate, an alicyclic diisocyanate and mixtures of these. Specific examples thereof include 1,5-naphthalene diisocyanate, 4,4'-diphenylmethane diisocyanate, 4,4'-diphenyldimethylmethane diisocyanate, 1,3-phenylene diisocyanate, 1,4-phenylene diisocyanate, 2,4-tolylene diisocyanate, 2,6-tolylene diisocyanate, a mixture of 2,4-tolylene diisocyanate with 2,6-tolylene diisocyanate, hexamethylene diisocyanate, cyclohexane-1,4-diisocyanate, xylylene diisocyanate, isophorone diisocyanate, dicyclohexylmethane-4,4'-diisocyanate, methylcylohexane diisocyanate, tetramethylxylene diisocyanate, 2,6-diisopropylphenyl isocyanate, 1,3,5-triisopropylbenzene-2,4-diisocyanate, etc.

The above polycarbodiimide compound can be also controlled so that it has a proper polymerization degree by using a compound, such as a monoisocyanate, which reacts with terminal isocyanate of the polycarbodiimide.

Examples of the monoisocyanate that controls the polymerization degree of the polycarbodiimide by blocking its terminal include phenyl isocyanate, tolyl isocyanate, dimethylphenyl isocyanate, cyclohexyl isocyanate, butyl isocyanate, naphthyl isocyanate, etc.

Examples of the epoxy compound that comes under the terminal blocker (F component) include N-glycidyl phthalimide, N-glycidyl-4-methyl phthalimide, N-glycidyl-4,5-dimethyl phthalimide, N-glycidyl-3-methyl phthalimide, N-glycidyl-3,6-dimethyl phthalimide, N-glycidyl-4-ethoxy phthalimide, N-glycidyl-4-chloro phthalimide, N-glycidyl-4,5-dichloro phthalimide, N-glycidyl-3,4,5-tetrabromo phthalimide, N-glycidyl-4-n-butyl-5-bormo phthalimide, N-glycidyl succinimide, N-glycidylhexahydro phthalimide, N-glycidyl-1,2,3,6-tetrahydro phthalimide, N-glycidyl maleimide, N-glycidyl-α,β-dimethyl succinimide, N-glycidyl-α-ethyl succinimide, N-glycidyl-α-propyl succinimide, N-glycidyl benzamide, N-glycidyl-p-methyl benzamide, N-glycidyl naphthoamide, N-glycidyl stearamide, N-methyl-4,5-epoxycyclohexane-1,2-dicarboximide, N-ethyl-4,5-epoxycyclohexane-1,2-dicarboximide, N-phenyl-4,5-epoxycyclohexane-1,2-dicarboximide, N-naphthyl-4,5-epoxycyclohexane-1,2-dicarboximide, N-tolyl-3-methyl-4,5-epoxycyclohexane-1,2-dicarboximide, o-phenylphenyl glycidyl ether, 2-methyloctyl glycidyl ether, phenyl glycidyl ether, 3-(2-xenyloxy)-1,2-epoxypropane, allyl glycidyl ether, butyl glycidyl ether, lauryl glycidyl ether, benzyl glycidyl ether, cyclohexyl glycidyl ether, α-cresyl glycidyl ether, p-t-butylphenyl glycidyl ether, glycidyl methacrylic ether, ethylene oxide, propylene oxide, styrene oxide, octylene oxide, hydroquinone diglycidyl ether, resorcin diglycidyl ether, 1,6-hexanediol diglycidyl ether, hydrogenated bisphenol A-diglycidyl ether, etc. Further, the epoxy compound also includes diglycidyl terephthalic ester, diglycidyl tetrahydrophthalic ester, diglycidyl hexahydrophthalic ester, dimethyldiglycidyl phthalic ester, phenylene diglycidyl ether, ethylene diglycidyl ether, trimethylene diglycidyl ether, tetramethylene diglycidyl ether, hexamethylene diglycidyl ether, etc.

One or two or more compounds can be optionally selected from these epoxy compounds to block carboxyl terminals of polylactic acid. In view of reactivity, however, ethylene oxide, propylene oxide, phenyl glycidyl ether, o-phenylphenyl glycidyl ether, p-t-butylphenyl glycidyl ether, N-glycidyl phthalimide, hydroquinone diglycidyl ether, resorcin diglycidyl ether, 1,6-hexanediol diglycidyl ether, hydrogenated bisphenol A-diglycidyl ether, etc., are preferred.

Examples of the oxazoline compound that comes under the terminal blocker (component F) include 2-methoxy-2-oxazoline, 2-ethoxy-2-oxazoline, 2-propoxy-2-oxazoline, 2-butoxy-2-oxazoline, 2-pentyloxy-2-oxazoline, 2-hexyloxy-2-oxazoline, 2-heptyloxy-2-oxazoline, 2-octyloxy-2-oxazoline, 2-nonyloxy-2-oxazoline, 2-decyloxy-2-oxazoline, 2-cyclopenxyloxy-2-oxazoline, 2-cyclohexyloxy-2-oxazoline, 2-allyloxy-2-oxazoline, 2-m-allyloxy-2-oxazoline, 2-crotyloxy-2-oxazoline, 2-phenoxy-2-oxazoline, 2-cresyl-2-oxazoline, 2-o-ethylphenoxy-2-oxazoline, 2-o-propylphenoxy-2-oxazoline, 2-o-phenylphenoxy-2-oxazoline, 2-m-ethylphenoxy-2-oxazoline, 2-m-propylphenoxy-2-oxazoline, 2-p-phenylphenoxy-2-oxazoline, 2-methyl-2-oxazoline, 2-ethyl-2-oxazoline, 2-propyl-2-oxazoline, 2-butyl-2-oxazoline, 2-pentyl-2-oxazoline, 2-hexyl-2-oxazoline, 2-heptyl-2-oxazoline, 2-octyl-2-oxazoline, 2-nonyl-2-oxazoline, 2-decyl-2-oxazoline, 2-cyclopentyl-2-oxazoline, 2-cyclohexyl-2-oxazoline, 2-allyl-2-oxazoline, 2-metha-allyl-2-oxazoline, 2-crotyl-2-oxazoline, 2-phenyl-2-oxazoline, 2-o-ethylphenyl-2-oxazoline, 2-o-propylphenyl-2-oxazoline, 2-o-phenylphenyl-2-oxazoline, 2-m-ethylphenyl-2-oxazoline, 2-m-propylphenyl-2-oxazoline, 2-p-phenylphenyl-2-oxazoline, etc., and further, the oxazoline compound includes 2,2'-bis(2-oxazoline), 2,2'-bis(4-methyl-2-oxazoline), 2,2'-bis(4,4'-dimethyl-2-oxazoline), 2,2'-bis(4-ethyl-2-oxazoline), 2,2'-bis(4,4'-diethyl-2-oxazoline), 2,2'-bis(4-propyl-2-oxazoline), 2,2'-bis(4-butyl-2-oxazoline), 2,2'-bis(4-hexyl-2-oxazoline), 2,2'-bis(4-phenyl-2-oxazoline), 2,2'-bis(4-cyclohexyl-2-oxazoline), 2,2'-bis(4-benzyl-2-oxazoline), 2,2'-p-phenylenebis(2-oxazoline), 2,2'-m-phenylenebis(2-oxazoline), 2,2'-o-phenylenebis(2-oxazoline), 2,2'-p-phenylenebis(4-methyl-2-oxazoline), 2,2'-p-phenylenebis(4,4'-dimethyl-2-oxazoline), 2,2'-m-phenylenebis(4-methyl-2-oxazoline), 2,2'-m-phenylenebis(4,4'-dimethyl-2-oxazoline), 2,2'-ethylenebis(2-oxazoline), 2,2'-tetramethylenebis(2-oxazoline), 2,2'-hexamethylenebis(2-oxazoline), 2,2'-octamethylenebis(2-oxazoline), 2,2'-decamethylenebis(2-oxazoline), 2,2'-ethylenebis(4-methyl-2-oxazoline), 2,2'-tetramethylenebis(4,4'-dimethyl-2-oxazoline), 2,2'-9,9'-diphenoxyethanebis(2-oxazoline), 2,2'-cyclohexylenebis(2-oxazoline), 2,2'-diphenylenebis(2-oxazoline), etc. Further, the above oxazoline compound includes polyoxazoline compounds containing the above compounds as monomer units, such as a styrene-2-isopropenyl-2-oxazoline copolymer, etc. One or two or more compounds can be optionally selected from these oxazoline compounds to block the carboxyl terminals of polylactic acid units.

Examples of the oxazine compound that comes under the terminal blocker (component F) include 2-methoxy-5,6-dihydro-4H-1,3-oxazine, 2-ethoxy-5,6-dihydro-4H-1,3-oxazine, 2-propoxy-5,6-dihydro-4H-1,3-oxazine, 2-butoxy-5,6-dihydro-4H-1,3-oxazine, 2-pentyloxy-5,6-dihydro-4H-1,3-oxazine, 2-hexyloxy-5,6-dihydro-4H-1,3-oxazine, 2-heptyloxy-5,6-dihydro-4H-1,3-oxazine, 2-octyloxy-5,6-dihydro-4H-1,3-oxazine, 2-nonyloxy-5,6-dihydro-4H-1,3-oxazine, 2-decyloxy-5,6-dihydro-4H-1,3-oxazine, 2-cyclopentyloxy-5,6-dihydro-4H-1,3-oxazine, 2-cyclohexyloxy-5,6-dihydro-4H-1,3-oxazine, 2-allyloxy-5,6-dihydro-4H-1,3-oxazine, 2-m-allyloxy-5,6-dihydro-4H-1,3-oxazine, 2-crotyloxy-5,6-dihydro-4H-1,3-oxazine, etc., and the above oxazine compound further includes 2,2'-bis(5,6-dihydro-4H-1,3-oxazine), 2,2'-methylenebis(5,6-dihydro-4H-1,3-oxazine), 2,2'-ethylenebis(5,6-dihydro-4H-1,3-oxazine), 2,2'-propylenebis(5,6-dihydro-4H-1,3-oxazine), 2,2'-butylenebis(5,6-dihydro-4H-1,3-oxazine), 2,2'-hexamethylenebis(5,6-dihydro-4H-1,3-oxazine), 2,2'-p-phenylenebis(5,6-dihydro-4H-1,3-oxazine), 2,2'-m-phenylenebis(5,6-dihydro-4H-1,3-oxazine), 2,2'-naphthylenebis(5,6-dihydro-4H-1,3-oxazine), 2,2'-P,P'-diphenylenebis(5,6-dihydro-4H-1,3-oxazine), etc. Further, the above oxazine compound includes polyoxazine compounds containing the above compounds as monomer units. One or two or more compounds can be optionally selected from these oxazine compounds to block the carboxyl terminals of polylactic acid units.

Further, one or two or more compounds can be optionally selected from the oxazoline compounds described as examples already and the above oxazine compounds to block the carboxyl terminals of polylactic acid units, while 2,2'-m-phenylenebis(2-oxazoline) and 2,2'-p-phenylenebis(2-oxazone) are preferred in view of heat resistance, reactivity and affinity to the aliphatic polyester.

Examples of the aziridine compound that comes under the terminal blocker (component F) include an addition reaction product of mono-, bis- or polyisocyanate compounds with ethyleneimine.

Two or more compounds of the above carbodiimide compound, epoxy compound, oxazoline compound, oxazine compound and aziridine compound may be used in combination as the terminal blocker (component F).

In the resin composition of this invention, the carboxyl terminals can be blocked to a proper degree depending upon use. With regard to the specific degree of carboxyl terminal blocking, the concentration of carboxyl terminals of the polylactic acid is preferably 10 equivalent weights/$10^3$ kg or less, more preferably 6 equivalent weights/$10^3$ kg or less, from the viewpoint of improvement of the hydrolysis resistance.

As a method of blocking the carboxyl terminal of the polylactic acid (component B) in the resin composition of this invention, a terminal blocker of a condensing-reaction type, addition-reaction type, etc., can be allowed to react. In the method of blocking the carboxyl terminal by a condensing reaction, the carboxyl terminal can be blocked by adding a proper amount of condensing-reaction type terminal blocker such as an aliphatic alcohol or an amide compound to a polymerization system during polymerization, and subjecting it to a dehydrating condensing reaction under reduced pressure, etc., while it is preferred to add the condensing-reaction type terminal blocker at the time of completion of the polymerization for attaining a high polymerization degree.

In the method of blocking the carboxyl terminal by an addition reaction, a proper amount of a terminal blocker such as a carbodiimide compound, an epoxy compound, an oxazoline compound, oxazine compound and an aziridine compound, can be allowed to react while the polylactic acid is in a molten state, and it can be added and allowed to react at the time of completion of the polymerizing reaction of the polymer.

The content of the terminal blocker (component F) per 100 parts by weight of the polylactic acid component (component B) is 0.01 to 5 parts by weight, preferably 0.05 to 4 parts by weight, more preferably 0.1 to 3 parts by weight.

Since the polylactic acid (component B) containing the phosphoric ester metal salt (component C) contains a metal component, the hydrolysis of the polylactic acid is sometimes promoted due to the metal. When the terminal blocker (component F) is caused to be co-present in this case, advantageously, the hydrolyzing reaction can be inhibited.

<Component D>

The resin composition of this invention preferably contains a triclinic inorganic nucleating agent (component D). The triclinic inorganic nucleating agent (component D) has the same triclinic crystal lattice as that of a stereo-complex crystal and is hence effective as a crystal nucleating agent for a stereo-complex crystal, while it does not at all work as a crystal nucleating agent for a homo-crystal that comes under an orthorhombic system. As a result, while it delays the growth of a homo-crystal, it can promote the growth of a stereo-complex crystal. The triclinic inorganic nucleating agent (component D) includes calcium dihydrogen phosphate-monohydrate, calcium metasilicate, sodium hydroxysulfate, sodium perborate, etc. Of these, calcium metasilicate is preferred from the viewpoint of inhibiting the molecular weight of the resin composition from decreasing.
The average particle diameter of the triclinic inorganic nucleating agent (component D) is preferably 0.1 μm or more but less than 10 μm, more preferably 0.3 μm or more but 10 μm or less, still more preferably 0.5 μm or more but less than 10 μm. When the average particle diameter is in the above range, the crystallization of a stereo-complex crystal efficiently proceeds. As a method for measuring an average particle diameter, for example, a static scattering method using an argon laser or a helium laser can be the most practical measuring method.
In the resin composition of this invention, the content of the triclinic inorganic nucleating agent (component D) per 100 parts by weight of the resin component containing 95 to 5 % by weight of the aromatic polycarbonate (component A) and 5 to 95 % by weight of the polylactic acid (component B) is preferably 0.001 to 10 parts by weight, more preferably 0.005 to 7 parts by weight, still more preferably 0.01 to 5 parts by weight. When the content of the triclinic inorganic nucleating agent is less than 0.001 part by weight, the content of a homo-crystal increases. When it exceeds 10 parts by weight, re-aggregation takes place, and its effect as a crystal nucleating agent is decreased.
In addition, when both the component C and the component D are contained, the total content of the component C and the component D per 100 parts by weight of the resin component containing 95 to 5 % by weight of the aromatic polycarbonate (component A) and 5 to 95 % by weight of the polylactic acid (component B) is preferably 0.001 to 10 parts by weight, more preferably 0.005 to 7 parts by weight, still more preferably 0.01 to 5 parts by weight.

<Component E>

When the resin composition of this invention contains an inorganic filler (component E), it can give a molded article excellent in mechanical properties, dimensional properties, etc.
The inorganic filler (component E) includes generally known various inorganic fillers such as a glass fiber, a carbon fiber, glass flakes, wollastonite, kaolin clay, mica, talc and various whiskers (potassium titanate whisker, aluminum borate whisker, etc.). With regard to the form of the inorganic filler, the form of fibers, the form of flakes, the form of spheres and the form of being hollow can be selected as required, and inorganic fillers having the form of fibers or flakes are preferred for improving the resin composition in strength and impact resistance.
In particular, as an inorganic filler, inorganic fillers formed of pulverization products of natural minerals are preferred, an inorganic filler formed of a pulverization product of natural silicate is more preferred, and in view of its form, further, mica, talc and wollastonite are preferred.
These inorganic fillers are materials independent of oil unlike materials derived from oil resources such as a carbon fiber, and it follows that materials having a low environmental burden are used. As a result, they produce an effect that the significance of using the component B having a low environmental burden is further enhanced. Further, the above more preferred inorganic fillers produce an advantageous effect that they exhibit excellent flame retardancy over a carbon fiber, etc.
The average particle diameter of mica used in this invention is an average particle diameter obtained by observing it with a scanning electron microscope, sampling mica pieces having a diameter of 1 μm or more and calculating a number average of 1,000 pieces of them. This number average particle diameter is preferably 10 to 500 μm, more preferably 30 to 400 μm, still more preferably 30 to 200 μm, most preferably 35 to 80 μm. When the number average particle diameter is less than 10 μm, the impact strength is sometimes decreased. Further, when it exceeds 500 μm, the impact strength is improved, but the appearance is liable to be degraded.
With regard to the thickness of mica, mica having a thickness, measured by observation through an electron microscope, of 0.01 to 10 μm can be used. Preferably, mica having a thickness of 0.1 to 5 μm can be used. With regard to its aspect ratio, mica having an aspect ratio of 5 to 200, preferably 10 to 100, can be used. Further, the mica that is used is preferably muscovite mica, and it has a Mohs hardness of about 3. Muscovite mica can accomplish high rigidity and high strength as compared with other mica such as phlogopite and there can be provided more preferred molded

articles.

The method for pulverizing mica includes a dry pulverization method in which mica ore is pulverized with a dry pulverizer and a wet pulverization method in which mica ore is primarily pulverized with a dry pulverizer, and then the primarily pulverized mica is fully pulverized in a slurry state with a wet pulverizer by adding a pulverizing auxiliary such as water, followed by dehydration and drying. In this invention, mica produced by any one of the pulverization methods can be used, while the dry pulverization method is inexpensive in cost and generally employed. On the other hand, the wet pulverization method is effective for more thinly and finely pulverizing mica, while it increases a cost. The mica may be surface-treated with various surface-treating agents such as a silane coupling agent, a higher fatty acid or a wax, and it may also have the form of granules prepared by granulating it with a sizing agent such as various resin, higher fatty acids and waxes.

The talc that can be used in this invention refers to scale-shaped particles having a laminar structure, and it is hydrous magnesium silicate as a chemical composition and is generally represented by the chemical formula of $4SiO_2 \cdot 3MgO \cdot 2H_2O$. It is normally composed of 56 to 65 % by weight of $SiO_2$, 28 to 35 % by weight of MgO and approximately 5 % by weight of $H_2O$. It contains, as other miner components, 0.03 to 1.2 % by weight of $Fe_2O_3$, 0.05 to 1.5 % by weight of $Al_2O_3$, 0.05 to 1.2 % by weight of CaO, 0.2 % by weight or less of $K_2O$, 0.2 % by weight or less of $Na_2O$, etc., and it has a specific gravity of approximately 2.7 and a Mohs hardness of 1.

The average particle diameter of the talc is preferably 0.5 to 30 μm. The average particle diameter refers to a particle diameter at an accumulation ratio of 50 % determined on the basis of a particle size distribution measured by an Andreasen pipette method according to JIS M 8016. The average particle diameter of talc is preferably 2 to 30 μm, more preferably 5 to 20 μm, most preferably 10 to 20 μm. Talc having an average particle diameter in the range of 0.5 to 30 μm gives an excellent surface appearance and flame retardancy in addition to rigidity and low anisotropy to the aromatic polycarbonate composition.

The method for pulverizing ore to produce talc is not specially limited, and there can be employed an axial flow type mill method, an annular type mill method, a roll mill method, a ball mill method, a jet mill method, a vessel-rotating compressive-shearing type mill method, etc. Further, the pulverized talc is preferably classified with various classifiers and uniform in particle diameter distribution. The classifier is not specially limited, and it includes impactor type inertial force classifiers (a variable impactor, etc.), Coanda effect utilized inertial force classifiers (an elbow jet, etc.), centrifugal field classifiers (a multicyclone, a microplex, a dispersion separator, AccuCut, a turbo classifier, a turboplex, a micro separator, a super separator, etc.).

The talc is preferably in the state of an aggregate in view of handling properties, and the production method therefor includes a method based on deaeration compression, a compression method using a sizing agent, etc. In particular, the method based on deaeration compression is preferred in that it is simple and is free from the inclusion of an unnecessary sizing resin component in the molded article of this invention.

The wollastonite that can be used in this invention is substantially represented by the chemical formula of $CaSiO_3$, and it normally contains approximately 50 % by weight or more of $SiO_2$, approximately 47 % by weight or more of CaO and others such as $Fe_2O_3$ or $Al_2O_3$. The wollastonite is a white acicular powder obtained by pulverizing wollastonite ore and classifying a pulverized product, and has a Mohs hardness of approximately 4.5. The average fiber diameter of the wollastonite to be used is preferably 0.5 to 20 μm, more preferably 0.5 to 10 μm, most preferably 1 to 5 μm. The above average fiber diameter is obtained by observing wollastonite through a scanning electron microscope, sampling pieces having a diameter of 0.1 μm or more and calculating a number average of 1,000 pieces of them.

The content of these inorganic fillers per 100 parts by weight of total of the aromatic polycarbonate (component A) and the polylactic acid (component B) is preferably 0.3 to 200 parts by weight, more preferably 1 to 100 parts by weight, still more preferably 5 to 70 parts by weight, most preferably 10 to 50 parts by weight. When the above content is smaller than 0.3 part by weight, the reinforcement effect on the molded article of this invention in mechanical properties is not sufficient. When it exceeds 200 parts by weight, undesirably, moldability and a hue are degraded. Some of these inorganic fillers work as a crystal nucleating agent, while it is required to disperse the inorganic filler fully uniformly in the polylactic acid for causing it to exhibit its full effect as a nucleating agent on the stereo-complex crystal in this invention. For realizing the above uniformly dispersed state, preferably, the polylactic acid and the inorganic filler are melt-mixed in advance of mixing them with the aromatic polycarbonate (component A).

When an inorganic filler having the form of fibers or flakes is used, the resin composition of this invention may contain a bending inhibitor for inhibiting the bending thereof. The bending inhibitor impedes the adhesion between a matrix resin and the inorganic filler and decreases a stress that works on the inorganic filler during melt-kneading to inhibit the bending of the inorganic filler. The effect produced by the bending inhibitor includes (1) an improvement in rigidity (an increased aspect ratio of the inorganic filler), (2) an improvement in tenacity, (3) an improvement in electric conductivity (in a case of an electrically conductive inorganic filler), etc. Specifically, the bending inhibitor refers to (i) a compound having low affinity to a resin, which compound is coated directly on the inorganic filler surface, and (ii) a compound having a structure having low affinity to a resin and having a functional group capable of reacting with the inorganic filler surface.

The compound having low affinity to a resin typically includes various lubricants. Examples of the lubricants include mineral oil, synthetic oil, higher fatty acid ester, higher fatty acid amide, polyorganosiloxane (silicone oil, silicone rubber, etc.), olefin wax (paraffin wax, polyolefin wax, etc.), polyalkylene glycol, fluorinated fatty acid ester, trifluorochloroethylene, fluorine oils such as polyhexafluoropropylene glycol.

The method for coating the compound having low affinity to a resin directly on the inorganic filler surface includes (1) a method in which the above compound or a solution or emulsion of the above compound is immersed in the inorganic filer, (2) a method in which the inorganic filler is passed through in a vapor or powder of the above compound, (3) the inorganic filler is irradiated with a powder, etc., of the above compound at a high speed, (4) a mechano-chemical method in which the inorganic filler and the above compound are rubbed against each other, etc.

The compound having a structure having low affinity to a resin and having a functional group capable of reacting with the inorganic filler surface includes the above lubricants modified with various functional groups. Examples of these functional groups include a carboxyl group, a carboxylic anhydride group, an epoxy group, an oxazoline group, an isocyanate group, an ester group, an amino group, an alkoxysilyl group, etc.

One of the bending inhibitors is suitably an alkoxysilane compound in which an alkyl group having 5 or more carbon atoms is bonded to a silicon atom. The number of carbon atoms of the above alkyl group bonding to a silicon atom is preferably 5 to 60, more preferably 5 to 20, still more preferably 6 to 18, particularly preferably 8 to 16. The number of such alkyl group(s) is preferably 1 or 2, and particularly preferably 1. Further, examples of the alkoxy group suitably include methoxy and ethoxy groups. These alkoxysilane compounds are suitable in that they are highly reactive with the inorganic filler surface and excellent in coating efficiency. They are hence suitable for fine inorganic fillers.

One of the bending inhibitors is suitably a polyolefin wax having at least one functional group selected from a carboxyl group and a carboxylic anhydride group. As for the molecular weight, the weight average molecular weight thereof is preferably 500 to 20,000, more preferably 1,000 to 15,000. In the above polyolefin wax, the amount of the carboxyl group and carboxylic anhydride group per gram of the lubricant having at least one functional group selected from the carboxyl group and carboxylic acid anhydride is preferably in the range of 0.05 to 10 meq/g, more preferably 0.1 to 6 meq/g, still more preferably 0.5 to 4 meq/g. With regard to the amount ratio of functional groups in the bending inhibitor, the amount ratio of functional groups other than the carboxyl group is also preferably equivalent to the amount ratio of the carboxyl group and carboxylic anhydride group.

The bending inhibitor is particularly preferably a copolymer of an $\alpha$-olefin and maleic anhydride. This copolymer can be produced by a melt-polymerization or bulk polymerization method in the presence of a radical catalyst according to a conventional method. The above $\alpha$-olefin preferably includes those which have 10 to 60 carbon atoms as an average value. $\alpha$-Olefins having 16 to 60 carbon atoms are more preferred, and $\alpha$-olefins having 25 to 55 carbon atoms are still more preferred.

The content of the bending inhibitor per 100 parts by weight of the resin component containing 95 to 5 % by weight of the aromatic polycarbonate (component A) and 5 to 95 % by weight of the polylactic acid (component B) is preferably 0.01 to 2 parts by weight, more preferably 0.05 to 1.5 parts by weight, still more preferably 0.1 to 0.8 part by weight.

<Other components>

(i) Flame retardant

The resin composition of this invention contains resorcinol bis(dixylenyl phosphate) and may contain another flame retardant. The flame retardant includes halogen-containing flame retardants such as a brominated epoxy resin, brominated polystyrene, brominated polycarbonate, brominated polyacrylate and chlorinated polyethylene, phosphoric ester-containing flame retardants such as a monophosphate compound and a phosphate oligomer compound, organic phosphorus-containing flame retardants other than the phosphoric ester-containing flame retardants, such as a phosphonate oligomer compound, a phosphonitrile oligomer compound and a phosphonic acid amide compound, organic metal salt-containing flame retardants such as an organosulfonic acid alkali (alkaline earth) metal salt, a boric acid metal salt flame retardant and a stannic acid metal salt flame retardant, silicone-containing flame retardants, etc. Further, a flame retardant auxiliary (e.g., sodium antimonate, antimony trioxide, etc.) and a dripping preventer (polytetrafluoroethylene capable of forming fibrils) may be incorporated and used in combination with the flame retardant.

Of the above flame retardants, compounds contain no chlorine atom or bromine atom are more suitable as a flame retardant in the molded article of this invention aiming to reduce an environmental burden as one of its features, since a factor that is said to be undesirable in thermal disposal or thermal recycle is reduced.

Further, the phosphoric ester-containing flame retardants are particularly preferred since an excellent hue can be obtained and since they exhibit an effect on the improvement of moldability. As specific examples of the phosphoric ester-containing flame retardants, there can be employed in particular one or two or more phosphoric ester compounds

of the following general formula (4), which also encompasses resorcinol bis(dixylenyl phosphate), a mandatory component (Component I) of the resin composition of the present invention.

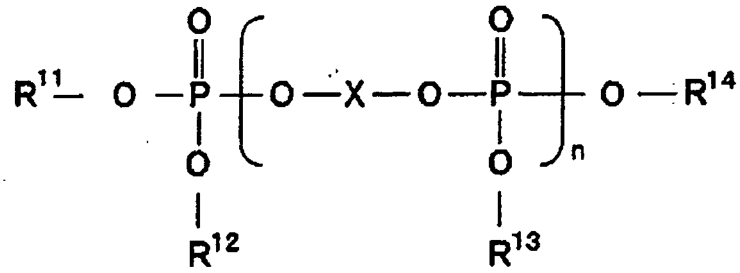

(4)

In the above formula, X is a group derived from hydroquinone, resorcinol, bis(4-hydroxydiphenyl)methane, bisphenol A; dihydroxydiphenyl, dihydroxynaphthalene, bis(4-hydroxyphenyl)sulfone, bis(4-hydroxyphenyl)ketone, bis(4-hydroxyphenyl)sulfide, etc., and n is an integer of 0 to 5, or an average between 0 to 5 when it is a mixture of phosphoric esters where the number of n differs. Each of $R^{11}$, $R^{12}$, $R^{13}$ and $R^{14}$ is independently a group derived from phenol, cresol, xylenol, isopropyl phenol, butyl phenol and p-cumyl phenol which are substituted or not substituted with one or more halogen atoms.

Further, in a more preferred compound of the above formula, X is a group derived from hydroquinone, resorcinol, bisphenol A and dihydroxydiphenyl, n is an integer of 1 to 3 or an average between 1 and 3 when the compound is a blend of phosphoric esters where the number of n differs, and each of $R^{11}$, $R^{12}$, $R^{13}$ and $R^{14}$ is independently a group derived from phenol, cresol and xylenol which are substituted, or more preferably not substituted, with one or more halogen atoms.

Of the above organophosphoric ester-containing flame retardants, triphenyl phosphate as a phosphate compound and bisphenol A bis(diphenyl phosphate) as phosphate oligomers can be preferably used since they are excellent in hydrolysis resistance as well. Resorcinol bis(dixylenyl phosphate) is used and bisphenol A bis(diphenyl phosphate) is preferred in view of heat resistance, etc. That is because they are excellent in heat resistance and are hence free from detrimental effects that they are thermally deteriorated or volatilized.

When these flame retardants are incorporated into the resin composition of this invention, the amount thereof per 100 parts by weight of the resin component containing 95 to 5 % by weight of the aromatic polycarbonate (component A) and 5 to 95 % of the polylactic acid (component B) is preferably in the range of 0.05 to 50 parts by weight. When the above amount is less than 0.05 part by weight, no sufficient flame retardancy is exhibited. When it exceeds 50 parts by weight, the strength and heat resistance of a molded article are impaired.

(ii) Thermal stabilizer

The resin composition of this invention further preferably contains a phosphorus-containing stabilizer for obtaining an excellent hue and stable flowability. As a phosphorus-containing stabilizer, it is preferred to incorporate a pentaerythritol type phosphate compound of the following formula (5).

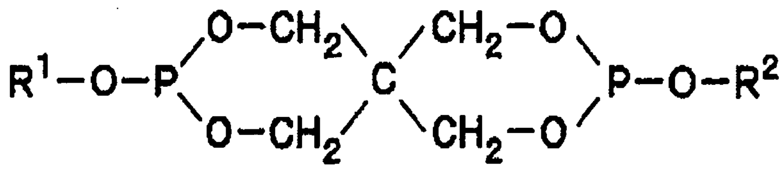

(5)

wherein each of $R^1$ and $R^2$ is a hydrogen atom, an alkyl group having 1 to 20 carbon atoms, an aryl or alkylaryl group having 6 to 20 carbon atoms, an aralkyl group having 7 to 30 carbon atoms, a cycloalkyl group having 4 to 20 carbon atoms or a 2-(4-oxyphenyl)propyl-substituted aryl group having 15 to 25 carbon atoms. The cycloalkyl group and the aryl group may be substituted with an alkyl group.

More specific examples of the above pentaerythritol type phosphate compound include distearyl pentaerythritol diphosphite, bis(2,4-di-tert-butylphenyl)pentaerythritol diphosphite, bis(2,6-di-tert-butyl-4-methylphenyl)pentaerythritol diphosphite, bis(2,6-di-tert-butyl-4-ethylphenyl)pentaerythritol diphosphite, phenylbisphenol A pentaerythritol diphosphite, bis(nonylphenyl)pentaerythritol diphosphite, dicyclohexylpentaerythritol disphosphite, etc. Of these, distearyl pentaerythritol diphosphite and bis(2,4-di-tert-butylphenyl)pentaerythritol diphosphite are preferred.

As other phosphorus-containing stabilizer, there can be employed various phosphite compounds other than

the above compounds, phosphonite compounds and phosphate compounds.

Examples of the phosphite compounds include triphenyl phosphite, tris(nonylphenyl) phosphite, tridecyl phosphite, trioctyl phosphite, trioctadecyl phosphite, didecylmonophenyl phosphite, dioctylmonophenyl phosphite, diisopropylmonophenyl phosphite, monobutyldiphenyl phosphite, monodecyldiphenyl phosphite, monooctyldiphenyl phosphite, 2,2-methylenebis(4,6-di-tert-butylphenyl)octyl phosphite, tris(diethylphenyl) phosphite, tris(di-iso-propylphenyl) phosphite, tris(di-n-butylphenyl) phosphite, tris(2,4-di-tert-butylphenyl) phosphite, tris(2,6-di-tert-butylphenyl) phosphite, etc.

As other phosphite compounds, further, those which react with dihydric phenols and have cyclic structures can be also used. Examples thereof include 2,2'-methylenebis(4,6-di-tert-butylphenyl) (2,4-di-tert-butylphenyl) phosphite, 2,2'-methylenebis(4,6-di-tert-butylphenyl)(2-tert-butyl-4-methylphenyl) phosphite, 2,2'-methylenebis(4-methyl-6-tert-butylphenyl) (2-tert-butyl-4-methylphenyl) phosphite, 2,2'-ethylidenebis(4-methyl-6-tert-butylphenyl)(2-tert-butyl-4-methylphenyl) phosphite, etc.

The phosphate compounds include tributyl phosphate, trimethyl phosphate, tricresyl phosphate, triphenyl phosphate, trichlorophenyl phosphate, triethyl phosphate, diphenylcresyl phosphate, diphenyl monoorthoxenyl phosphate, tributoxyethyl phosphate, dibutyl phosphate, dioctyl phosphate, diisopropyl phosphate, etc. Triphenyl phosphate and trimethyl phosphate are preferred.

The phosphonite compounds include tetrakis(2,4-di-tert-butylphenyl)-4,4'-biphenylenediphosphonite, tetrakis(2,4-di-tert-butylphenyl)-4,3'-biphenylenediphosphonite, tetrakis(2,4-di-tert-butylphenyl)-3,3'-biphenylenediphosphonite, tetrakis(2,6-di-tert-butylphenyl)-4,4'-biphenylenediphosphonite, tetrakis(2,6-di-tert-butylphenyl)-4,3'-biphenylenediphosphonite, tetrakis(2,6-di-tert-butylphenyl)-3,3'-biphenylenediphosphonite, bis(2,4-di-tert-butylphenyl)-4-phenyl-phenylphosphonite, bis(2,4-di-tert-butylphenyl)-3-phenyl-phenylphosphonite, bis(2,6-di-n-butylphenyl)-3-phenyl-phenylphosphonite, bis(2,6-di-tert-butylphenyl)-4-phenyl-phenylphosphonite, bis(2,6-di-tert-butylphenyl)-3-phenyl-phenylphosphonite, etc. Tetrakis(di-tert-butylpheyl)-biphenylenediphosphonite and bis(di-tert-butylphenyl)-phenyl-phenylphosphonite are preferred, and tetrakis(2,4-di-tert-butylphenyl)-biphenylenediphosphonite and bis(2,4-di-tert-butylphenyl)-phenyl-phenylphosphonite are more preferred.

The above phosphonite compound can be preferably used in combination with the above phosphite compound having an aryl group substituted with two or more alkyl groups.

The phosphonate compound includes dimethyl benzenesulfonate, diethyl benzenesulfonate, dipropyl benzenesulfonate, etc.

The above phosphorus-containing stabilizers can be used singly or in combination of two or more of them, and it is preferred to incorporate at least an effective amount of the pentaerythritol type phosphite compound. The amount of the phosphorus-containing stabilizer to be incorporated, per 100 parts by weight of the resin component containing 95 to 5 % by weight of the aromatic polycarbonate (component A) and 5 to 95 % by weight of the polylactic acid (component B), is 0.001 to 1 part by weight, preferably 0.01 to 0.5 part by weight, more preferably 0.01 to 0.3 part by weight.

(iii) Elastic polymer

The resin composition of this invention can contain an elastic polymer as an impact resistance improver, and as an example of the elastic polymer, there is a graft copolymer obtained by copolymerizing a rubber component having a glass transition temperature of 10°C or lower and one or two or more monomers selected from an aromatic vinyl, vinyl cyanide, acrylic ester, methacrylic ester and vinyl compounds copolymerizable with these. A more preferred elastic polymer is a core-shell type graft copolymer obtained by graft-polymerizing one or two or more shells of the above monomers on a core of the rubber component.

Further, there is also a block copolymer of the above rubber component and the above monomer(s). Specific examples of the above block copolymer include thermoplastic elastomers such as a styrene-ethylenepropylene-styrene elastomer (hydrogenated styrene-isoprene-styrene elastomer) or a hydrogenated styrene-butadiene-styrene elastomer. Further, there can be also used other various elastic polymers known as thermoplastic elastomers, such as a polyurethane elastomer, a polyester elastomer and a polyetheramide elastomer.

A core-shell type graft copolymer is more suitable as an impact resistance improver. In the core-shell type graft copolymer, the particle diameter of the core thereof as a weight average particle diameter is preferably 0.05 to 0.8 $\mu$m, more preferably 0.1 to 0.6 $\mu$m, still more preferably 0.1 to 0.5 $\mu$m. When it is in the range of 0.05 to 0.8 $\mu$m, superior impact resistance is accomplished. An elastic polymer containing 40 % or more of a rubber component is preferred, and an elastic polymer containing 60 % or more of a rubber component is more preferred.

The rubber component includes butadiene rubber, butadiene-acryl composite rubber, acrylic rubber, acryl-silicone composite rubber, isobutylene-silicone composite rubber, isoprene rubber, styrene-butadiene rubber, chloroprene rubber, ethylene-propylene rubber, nitrile rubber, ethylene-acryl rubber, silicone rubber, epichlorohydrin rubber, fluorine rubber and those which are obtained by hydrogenating unsaturated bond portions of these. From the viewpoint of a harmful substance that may occur during combustion, a rubber component free of halogen atoms is preferred with respect to an environmental burden.

The glass transition temperature of the rubber component is preferably -10°C or lower, more preferably - 30°C or lower, and as a rubber component, butadiene rubber, butadiene-acryl composite rubber, acryl rubber and acryl-silicone composite rubber are particularly preferred. The composite rubber refers to a rubber obtained by copolymerizing two rubber components or a rubber having an IPN structure in which rubber components are non-separably tangled with each other.

The aromatic vinyl in the vinyl compound to be copolymerized with the rubber component includes styrene, $\alpha$-methylstyrene, p-methylstyrene, alkoxystyrene, halogenated styrene, etc., and styrene is particularly preferred. Further, the acrylic ester includes methyl acrylate, ethyl acrylate, butyl acrylate, cyclohexyl acrylate, octyl acrylate, etc., the methacrylic ester includes methyl methacrylate, ethyl methacrylate, butyl methacrylate, cyclohexyl methacrylate, octyl methacrylate, etc., and methyl methacrylate is particularly preferred. Of these, it is particularly preferred to incorporate methacrylic esters such as methyl methacrylate as essential components. That is, since they are excellent in affinity to the aromatic polycarbonate, more elastic polymers come to exist in the above resin, so that the excellent impact resistance that the aromatic polycarbonate has is more effectively exhibited, and as a result, the resin composition is improved in impact resistance. More specifically, the content of the methacrylic ester per 100 % by weight of the graft component (per 100 % by weight of the shell in the core-shell type polymer) is preferably 10 % by weight or more, more preferably 15 % by weight or more.

The elastic polymer containing a rubber component having glass transition temperature of 10°C or lower may be a product obtained by any one of mass polymerization, solution polymerization, suspension polymerization and emulsion polymerization, and as a grafting method for copolymerization, any one of single grafting and multi-grafting may be employed. Further, it may be a mixture of only a graft component formed as a byproduct during the production with the copolymer. Further, the polymerization method not only includes a general emulsion polymerization method but also includes a soap-free polymerization method using an initiator such as potassium persulfate, a seed polymerization method, a two-stage swelling polymerization method, etc. Further, there may be employed a method in a suspension polymerization method, in which an aqueous phase and a monomer phase are held separately, these two are accurately fed to a continuous dispersing machine and the particle diameter is controlled on the basis of the number of rotation of the dispersing machine, or a method in a continuous production method, in which a monomer phase is fed to an aqueous liquid having dispersing capability through fine orifices having a diameter of several to several tens $\mu$m each or a porous filter to control the particle diameter. In the core-shell type graft polymer, the reaction may be a single state or multi-stage reaction for the core and the shell.

These elastic polymers are commercially easily available. Examples of the elastic polymers containing butadiene rubber, acryl rubber or butadiene-acryl composite rubber as a main component include Kane Ace® B series (e.g., B-56, etc.) supplied by Kaneka Corporation, METABLEN® C series (e.g., C-223A, etc.) and W series (e.g., W-450A, etc.) supplied by Mitsubishi Rayon Co., Ltd., Paraloid® EXL series (e.g., EXL-2602, etc.), HIA series (e.g., HIA-15, etc.), BTA series (e.g., BTA-III, etc.) and KCA series supplied by Kureha Corporation, Paraloid® EXL series and KM series (e.g., KM-336P, KM-357P, etc.) supplied by Rohm & Haas Company, and UCL Modifier resin series supplied by Ube Cycon Co., Ltd. (UMG AXS series supplied by UMG ABS, Ltd.). The elastic polymers containing an acryl-silicone composite rubber as a main component include those which are commercially available in the trade name of METABLEN S-2001 or SRK-200 supplied by Mitsubishi Rayon Co., Ltd.

The amount ratio of the impact resistance improver per 100 parts by weight of the resin component containing 95 to 5 % by weight of the aromatic polycarbonate (component A) and 5 to 95 % by weight of the polylactic acid (component B) is preferably 0.2 to 50 parts by weight, more preferably 1 to 30 parts by weight, still more preferably 1.5 to 20 parts by weight. When its amount is in the above range, the composition can be imparted with excellent impact resistance while inhibiting its rigidity from decreasing.

(iv) Crystal nucleating agent

In combination with the phosphoric ester metal salt (component C) and the triclinic inorganic nucleating agent (component D), the resin composition of this invention may also contain a known compound that is normally used as a nucleating agent for polylactic acid and a crystalline resin such as an aromatic polyester resin.

Examples of the above nucleating agent include inorganic fine particles such as talc, silica, graphite, a carbon powder, pyrophyllite, gypsum and neutral clay, metal oxides such as magnesium oxide, aluminum oxide and titanium dioxide, sulfate, phosphate, phosphonate, silicate, oxalate, stearate, benzoate, salicylate, tartarate, sulfonate, montan wax salt, montan wax ester salt, terephthalate, benzoate, carboxylate, etc.

Of these crystal nucleating agents, talc has in particular a high effect. Talc having an average particle diameter of 0.5 to 30 $\mu$m can be used, and talc having an average particle diameter of 0.5 to 20 $\mu$m is preferably used, and talc having an average particle diameter of 1 to 10 $\mu$m is more preferably used. For obtaining a composition or molded article having a high crystallinity, it is required to generate more crystal nuclei. As far as talc having an average particle diameter of over 30 $\mu$m is concerned, it is required to be added in a large amount for generating more crystal nuclei, so that it

has low effectiveness as a nucleating agent but is rather effectively used as a reinforcing material. On the other hand, talc having an average particle diameter of less than 1 μm is highly cohesive and is hence liable to agglomerate in the polylactic acid, and the amount of crystal nuclei to be formed is rather decreased, so that it has low effectiveness for a nucleating agent.

The amounts of these crystal nucleating agents cannot be uniformly determined since their amounts required for exhibiting their effects differ depending upon the types and forms of the nucleating agents, while the above amount of each per 100 parts by weight of the polylactic acid component (component B) is 0.01 to 5 parts by weight, preferably 0.05 to 3 parts by weight, more preferably 0.1 to 2 parts by weight. When the amount of the crystal nucleating agent added is too small, the effect of the crystal nucleating agent is not exhibited. On the other hand, when it is incorporated to excess, the effectiveness of the crystal nucleating agent may sometimes decrease due to particle aggregation of the crystal nucleating agent.

The method of incorporating the crystal nucleating agent is not specially limited, while it is preferably incorporated when a co-presence composition containing the polylactic acid (component B-1) composed mainly of L-lactic acid unit, the polylactic acid (component B-2) composed mainly of D-lactic acid unit and the phosphoric ester metal salt (component C) is prepared or when the above co-presence composition is heat-treated.

(v) Other additives

So long as the effect of this invention can be exhibited, the rein composition of this invention may contain other thermoplastic resins (such as a polyalkylene terephthalate resin, a polyallylate resin, a liquid crystal polyester resin, a polyamide resin, a polyimide resin, a polyetherimide resin, a polyurethane resin, a silicone resin, a polyphenylene ether resin, a polyphenylene sulfide resin, a polysulfone resin, polyolefin resins including polyethylene, polypropylene, etc., a polystyrene resin, an acrylonitrile/styrene copolymer (AS resin), an acrylonitrile/butadiene/styrene copolymer (ABS resin), a polystyrene resin, a high-impact polystyrene resin, a syndiotactic polystyrene resin, a polymethacrylate resin or a phenoxy or epoxy resin.), antioxidants (such as a hindered phenol-containing compound or a sulfur-containing antioxidant), ultraviolet absorbents (benzotriazole-, triazine- and benzophenone-containing ultraviolet absorbents, etc.), photostabilizers (HALS, etc.), mold release agents (saturated fatty acid ester, unsaturated fatty acid ester, polyolefin wax, a fluorine compound, paraffin wax, beeswax, etc.), a flowability modifier (polycaprolactone, etc.), colorants (carbon black, titanium dioxide, various organic dyes, metallic pigments, etc.), light-diffusing agents (acryl crosslinked particles, silicone crosslinked particles, etc.), a fluorescent whitener, a luminous pigment, a fluorescent dye, an antistatic agent, inorganic and organic antimicrobial agent, photocatalytic stain-proofing agents (titanium oxide fine particles, zinc oxide fine particles, etc.), an infrared absorbent, a photochromic agent, an ultraviolet absorbent, etc. These various additives can be incorporated in amounts that are well known when they are incorporated into an aromatic polycarbonate.

<Process for producing resin composition>

The resin composition of this invention may be produced by mixing all of its components at one time, while it is preferred to cause the polylactic acid (component B) and the phosphoric ester metal salt (component C) to be co-present and heat-treat them before they are mixed with the aromatic polycarbonate (component A), since a stereo-complex can be efficiently generated.

That is, the resin composition of this invention can be produced by the steps of (i) mixing the polylactic acid (component B-1) composed mainly of L-lactic acid, the polylactic acid (component B-2) composed mainly of D-lactic acid and the phosphoric ester metal salt (component C) and heating the mixture, and
(ii) mixing the thus-obtained mixture with the aromatic polycarbonate (component A) and the terminal blocker (component F).

i) Preparation of co-presence composition

When the co-presence composition is prepared, preferably, the polylactic acid unit (component B-1) composed mainly of L-lactic acid units and the polylactic acid unit (component B-2) composed mainly of D-lactic acid units are mixed as uniformly as possible. When they are uniformly mixed, a stereo-complex can be efficiently generated when the mixture is heat-treated. The co-presence composition can be prepared in the presence of a solvent, and it can be also prepared in the absence of a solvent.

As a method for the preparation of the co-presence composition in the presence of a solvent, there can be employed a method in which the co-presence composition is obtained by reprecipitation from a state of being dissolved in a solution, and a method in which the co-presence composition is obtained by removing the solvent by heating.

When the co-presence composition is obtained by reprecipitation in the presence of a solvent, first, a solution containing the polylactic acid (component B-1) composed mainly of L-lactic acid units and the polylactic acid (component

B-2) composed mainly of D-lactic acid units is prepared. In this case, preferably, solutions of the component B-1 and the component B-2 are separately prepared and mixed, or the components are together dissolved in a solvent and mixed.

The weight ratio of the polylactic acid (component B-1) composed mainly of L-lactic acid units and the polylactic acid (component B-2) composed mainly of D-lactic acid units is preferably adjusted so as to be in the range of 10/90 to 90/10, in order to efficiently generate a stereo-complex of the polylactic acid in the resin composition of this invention. The weight ratio of the component B-1 and the component B-2 is more preferably 25/75 to 75/25, particularly preferably 40/60 to 60/40.

The solvent is not specially limited so long as the polylactic acids (components B-1 and B-2) are soluble therein. For example, one of, or a mixture of two or more of, chloroform, methylene chloride, dichloroethane, tetrachloroethane, phenol, tetrahydrofuran, N-methylpyrrolidone, N,N-dimethylformamide, butyrolactone, trioxane, hexafluoroisopropanol, etc., is preferred.

The phosphoric ester metal salt (component C) is insoluble in the above solvents, or it is dissolved therein but sometimes remains in the solvent after reprecipitation. A co-presence composition of polylactic acids (components B-1 and B-2) obtained by the reprecipitation and the component C are hence required to be mixed in other manner in order to prepare the co-presence composition.

The co-presence composition and the component C are mixed without any special limitation so long as they are uniformly mixed, and there can be employed any method in which they are mixed in a powder state or melt-mixed.

Then, the solvent is removed, and the co-presence composition containing the polylactic acids (component B-1, component B-2) and the phosphoric ester metal salt (component C) can be obtained.

When it is intended to prepare the co-presence composition at once, solutions or dispersions of the component B-1, the component B-2 and the component C respectively in separate solvents can be mixed. Further, the co-presence composition can be also obtained by mixing all of the components together in the solvent to prepare a solution or dispersion and then volatilizing the solvent by heating.

With regard to the temperature-elevation speed when the solvent is volatilized (heat treatment), the heat treatment is preferably carried out for a short period of time since the heat treatment for a long period of time can cause decomposition, while it is not specially limited.

The co-presence composition containing the polylactic acids (components B-1 and B-2) and the phosphoric ester metal salt (component C) can be also prepared in the absence of a solvent. That is, predetermined amounts of the component B-1, the component B-2 and the component C that are formed into powders or chips in advance are mixed, and then the mixture is melt-mixed, whereby the co-presence composition can be prepared. Further, one of the component B-1 or the component B-2 is melted, and then the remaining components are mixed to prepare co-presence composition.

The size of the above powder or chips is not specially limited so long as the powders or chips of the polylactic acids (component B-1, component B-2) are uniformly mixed, while it is preferably 3 mm or less, more preferably 1 to 0.25 mm. When they are melt-mixed, they form a stereo-complex crystal regardless of their sizes. However, when the mixture of the powders or chips is simply melted after they are uniformly mixed, and when the powders or chips have a diameter of over 3 mm, undesirably, the mixing comes to be non-uniform and a homo-crystal is liable to precipitate.

Further, as an apparatus to be used for uniformly mixing the above powders or chips, a batch type reactor with a stirring blade and a continuous reactor can be used as well as a twin-screw or single-screw extruder when they are melt-mixed, and when powders are mixed, it can be also suitably selected from a tumbler type powder mixer, a continuous powder mixer, various milling apparatuses, etc.

Further, when the above co-presence composition is prepared, the inorganic filler (component E), the terminal blocker (F) and other additives except aromatic polycarbonate (component A) such as the inorganic bending inhibitor, the lubricant, the flame retardant, the thermal stabilizer, the elastic polymer (impact resistance improver), the antioxidant, the ultraviolet absorbent, the photostabilizer, the mold release agent, the flowability improver, the colorant, the light diffusing agent, the fluorescent whitener, the luminous pigment, the fluorescent dye, the antistatic agent, the antimicrobial agent and the crystal nucleating agent may be contained.

In particular, it is preferred to add the terminal blocker (component F) at the stage of preparation of the co-presence composition for improving the obtained final resin composition in hydrolysis resistance, since the terminal blocker and the polylactic acid (component B) are so uniformly mixed that the acidic terminal of the polylactic acid is more efficiently blocked. Further, it is in particular preferred to add the phosphorus-containing thermal stabilizer and the hindered phenol-or sulfur-containing antioxidant at the stage of preparation of the co-presence composition, since the co-presence composition is improved in thermal stability at the stage of heat-treatment thereof.

ii) Heating of co-presence composition

In this invention, heating the co-presence composition containing the polylactic acids (components B-1, component B-2) and the phosphoric ester metal salt (component C) refers to maintaining the co-presence composition in a

temperature range of 240 to 300°C for a predetermined time period. The heating temperature is preferably 250 to 300°C, more preferably 260 to 290°C. When it exceeds 300°C, undesirably, it is difficult to inhibit a decomposing reaction. When it is a temperature lower than 240°C, undesirably, uniform mixing by the heat treatment does not proceed, and it is difficult to generate a stereo-complex efficiently. The heating time period is not specially limited, while it is 0.2 to 60 minutes, preferably 1 to 20 minutes. As an atmosphere during the heating, any one of an inert atmosphere under normal pressure and an inert atmosphere under reduced pressure can be employed.

Any apparatus and method for the heating can be employed so long as they can perform the heating with adjusting the atmosphere. For example, a batch type reactor, a continuous reactor, a twin-screw or single-screw extruder can be employed, or a method for treatment with molding with a press machine or a flow-tube type extruder can be also employed.

When the above co-presence composition containing the polylactic acids (component B-1, component B-2) and the phosphoric ester metal salt (component C) is prepared by a melt-mixing method in the absence of a solvent, the heat treatment of the co-presence composition is accomplished concurrently with the preparation of the co-presence composition.

Further, the above heating of the co-presence composition can be carried out after addition of the triclinic inorganic nucleating agent (component D), the inorganic filler (component E), the terminal blocker (F) and various additives other than the aromatic polycarbonate (component A) such as the inorganic bending inhibitor, the lubricant, the flame retardant, the thermal stabilizer, the elastic polymer (impact resistance improver), the antioxidant, the ultraviolet absorbent, the photostabilizer, the mold release agent, the flowability improver, the colorant, the light diffusing agent, the fluorescent whitener, the luminous pigment, the fluorescent dye, the antistatic agent, the antimicrobial agent and the crystal nucleating agent as the other additives.

In particular, the terminal blocker (component F) is preferably present at the stage of the heat treatment for improving the final resin composition in hydrolysis resistance, since a reaction for blocking the acidic terminal of the polylactic acid is efficiently proceeds during the heat treatment. Further, the phosphorus-containing thermal stabilizer and the antioxidant such as the hindered phenol- or sulfur-containing antioxidant, are preferably present at the stage of the heat treatment, since they improve heat stability during the heat treatment.

iii) Preparation of resin composition

The resin composition of this invention is prepared by further mixing the heated co-presence composition with the aromatic polycarbonate (component A), the terminal blocker (component F) and other additive components.

The "other additive components" include optional additive components such as triclinic inorganic nucleating agent (component D), the inorganic filler (component E), the inorganic bending inhibitor, the lubricant, the flame retardant, the thermal stabilizer, the elastic polymer (impact resistance improver), the antioxidant, the ultraviolet absorbent, the photostabilizer, the mold release agent, the flowability improver, the colorant, the light diffusing agent, the fluorescent whitener, the luminous pigment, the fluorescent dye, the antistatic agent, the antimicrobial agent and the crystal nucleating agent.

For producing the above resin composition of this invention, any method can be employed. For example, there can be employed a method in which the heated co-presence composition, the aromatic polycarbonate (component A) and other optional components are mixed preliminarily, and then the mixture is melt-kneaded and pelletized. Means for the preliminary mixing include a Nauter mixer, a V-blender, a Henschel mixer, a mechano-chemical apparatus, an extrusion mixer, etc. In the preliminary mixing, granulation may be carried out with an extrusion granulator, a briquetting machine, etc., as well. After preliminary mixing, the mixture is melt-kneaded with a melt-kneading machine typified by a vented twin-screw extruder and then pelletized with an apparatus such as a pelletizer. As other melt-kneading machine, there can be a Banbury mixer, a kneading roll, a constant-heat stirrer, etc., while a vented twin-screw extruder is preferred. There can be also employed another method in which each component is independently fed to a melt-kneading machine typified by a twin-screw extruder without preliminary mixing.

When a pulverized product of a molded article is used as the aromatic polycarbonate (component A), such a pulverized product has the property of being relatively bulky. In feeding it to an extruder, it is hence preferred to mix it with other component(s) having a high bulk density, or even when it is independently fed, it is preferred to feed it together with component(s) having a high bulk density. Such a production method more keeps a recycled aromatic polycarbonate from deteriorating a resin, and there is obtained a resin composition having a more suitable hue. Further, any raw material in the form of a liquid is preferably fed independently by means of a separate liquid-injecting apparatus. Further, when the inorganic filler is incorporated, it can be fed through a first feed port in the base of an extruder screw, while it is more preferably fed through a side feeder from a second feed port somewhere in the middle of the extruder.

<Content of stereo-complex crystal>

In the resin composition of this invention, the stereo-complex crystal content (X) represented by the following expression (1) using a melting enthalpy derived from polylactic acid (component B) crystal in the temperature elevation process of measurement with a differential scanning calorimeter (DSC) is 80 % or more.

$$X(\%) = \{\Delta Hb/(\Delta Ha + \Delta Hb)\} \times 100 \qquad (I)$$

wherein ΔHa and AHb are respectively a melting enthalpy (ΔHa) of a crystal melting point that appears at lower than 190°C and a melting enthalpy (ΔHb) of a crystal melting point that appears at 190°C or higher but lower than 250°C in the temperature elevation process with a differential scanning calorimeter (DSC).

The above ΔHa and ΔHb are determined by measuring a resin composition with a differential scanning calorimeter (DSC) in a nitrogen atmosphere at a temperature elevation rate of 20°C/minute.

With an increase in the stereo-complex crystal content (X), the hydrolysis resistance improves more, and in various molded articles obtained by processing the resin composition, the hydrolysis resistance and the heat resistance also improve more. The stereo-complex crystal content (X) is preferably 85 % or more, more preferably 90 % or more.

The melting point of the stereo-complex crystal is preferably in the range of 190 to 250°C, more preferably in the range of 200 to 230°C. The melting enthalpy thereof is 20 J/g or more, more preferably 30 J/g or more.

Specifically, preferably, the stereo-complex crystal content (X) is 80 % or more, the melting point is in the range of 190 to 250°C, and the melting enthalpy is 20 J/g or more.

<Production of molded article>

The resin composition of this invention is generally obtained as pellets produced by the above method, and molded articles can be produced from the pellets as a raw material by various molding methods such as injection molding or extrusion molding.

In the injection molding, not only a normal cold runner molding method but also a hot runner molding method can be employed. In the injection molding, molded articles can be obtained not only by a normal molding method but also by injection molding methods such as injection compression molding, injection press molding, gas-assisted injection molding, expansion molding (including a method of injecting a supercritical fluid), insert molding, in-mold coating molding, molding in a heat-insulated mold, molding in a mold by rapid heating and cooling, two-color molding, sandwich molding and ultrahigh speed injection molding, depending upon purposes as required. Advantages of these various molding methods are well known.

In the extrusion molding, various contour extrusion molded articles and products such as a sheet and a film can be obtained. For obtaining a sheet or a film, an inflation method, a calender method and a casting method can be also employed. Further, it can be also molded into a heat-shrinkable tube by applying a specific stretching operation.

When the resin composition of this invention is subjected to rotational molding or blow molding, a hollow molded article can be also obtained.

Molded articles obtained by molding the resin composition of this invention are suitable as sheathing materials for office automation apparatuses and home electric appliances. Examples of these include sheathing or housing materials for a personal computer, a laptop computer, game machines (a home video game machine, an arcade video game machine, pachinko, a slot machine, etc.), displays (CRT, liquid crystal, plasma, projector, organic EL, etc.), a mouse, and a printer, a copying machine, a scanner, and a facsimile machine (including a machine combining these), and switch molded articles such as a key board or various switches. Further, molded articles of this invention are useful for articles in broad use fields, and examples thereof include personal digital assistance (co-called PDA), a mobile terminal, a portable storage book (dictionaries, etc.), a portable TV set, drives for storage media (CD, MD, DVD, a next-generation high-density disc, a hard disc, etc.), reading devices for recording media (IC card, smart media, memory stick, etc.), and electric/electronic devices and appliances such as an optical camera, a digital camera, a parabolic antenna, a power tool, VTR, a clothes iron, a hair drier, a rice cooker, an electronic oven, acoustic equipment, lighting equipment, a refrigerator, an air conditioner, an air cleaning appliance, a minus ion generator and a typewriter. Molded articles of this invention can be applied to various parts such as sheathing or housing materials for these. Further, they are suitable for various containers and various general merchandise such a, covers, base portions of pens and pencils, ornamental articles. Furthermore, they include automotive parts such as a lamp socket, a lamp reflector, a lamp housing, an instrumental panel, a center console panel, a deflecter part, an automotive navigation equipment part, an automotive audiovisual system part and an automotive mobile computer part.

Further, a molded article obtained by molding the resin composition of this invention can be imparted with other

function by applying surface modification thereto. The surface modification refers to the formation of a new layer on the surface of the molded article by vapor deposition (physical vapor deposition, chemical vapor deposition, etc.), plating (electric plating, electroless plating, plating using melting state, etc.), painting, coating, printing, etc., and a method that is employed for a normal resin molded article can be applied.

Examples

This invention will be explained in detail below, while this invention shall not be limited thereto.

Only Examples 24 and 25 are according to the invention.

<Production of polylactic acid>

Polylactic acids were produced by methods shown in the following Preparation Examples. Values in Preparation Examples were determined by the following methods.

(1) Weight average molecular weight (Mw):
The weight average molecular weight of polylactic acid was determined on the basis of GPC (column temperature 40°C, chloroform) and comparison with polystyrene standard samples.
(2) Crystallization point, melting point:
Polylactic acid was measured with DSC in a nitrogen atmosphere at a temperature elevation rate of 20°C/minute to determine a crystallization point (Tc) and a melting point (Tm).

Preparation Example 1: Preparation of polylactic acid (B-11)

97.5 Parts by weight of L-lactide (Musashino Chemical Laboratory, Ltd.) and 2.5 parts by weight of D-lactide (Musashino Chemical Laboratory, Ltd.) were charged into a polymerizer, and atmosphere in a system was replaced with nitrogen. Then, 0.1 part by weight of stearyl alcohol and 0.05 part by weight of tin octylate as a catalyst were added, followed by polymerization at 190°C for 2 hours. Then, remaining lactide was removed under reduced pressure, and a polymer was formed into chips to give polylactic acid (B-11). The thus-obtained polylactic acid (B-11) had a weight average molecular weight (Mw) of $16.5x10^4$, a crystallization point (Tc) of 117°C and a melting point (Tm) of 158°C.

Preparation Example 2: Preparation of polylactic acid (B-21)

97.5 Parts by weight of D-lactide (Musashino Chemical Laboratory, Ltd.) and 2.5 parts by weight of L-lactide (Musashino Chemical Laboratory, Ltd.) were charged into a polymerizer, and atmosphere in a system was replaced with nitrogen. Then, 0.1 part by weight of stearyl alcohol and 0.05 part by weight of tin octylate as a catalyst were added, followed by polymerization at 190°C for 2 hours. Then, remaining lactide was removed under reduced pressure, and a polymer was formed into chips to give polylactic acid (B-21). The thus-obtained polylactic acid (B-21) had a weight average molecular weight (Mw) of $18.8x10^4$, a crystallization point (Tc) of 117°C and a melting point (Tm) of 156°C.

Preparation Example 3: Preparation of polylactic acid (B-12)

100 Parts by weight of L-lactide (Musashino Chemical Laboratory, Ltd.) was charged into a polymerizer, and atmosphere in a system was replaced with nitrogen. Then, 0.005 part by weight of tin octylate as a catalyst was added, followed by polymerization at 180°C for 2 hours. Then, remaining lactide was removed under reduced pressure, and a polymer was formed into chips to give polylactic acid (B-12). The thus-obtained polylactic acid (B-12) had a weight average molecular weight (Mw) of $14.3x10^4$, a crystallization point (Tc) of 122°C and a melting point (Tm) of 165°C.

Preparation Example 4: Preparation of polylactic acid (B-22)

100 Parts by weight of D-lactide (Musashino Chemical Laboratory, Ltd.) was charged into a polymerizer, and atmosphere in a system was replaced with nitrogen. Then, 0.005 part by weight of tin octylate as a catalyst was added, followed by polymerization at 180°C for 2 hours. Then, remaining lactide was removed under reduced pressure, and a polymer was formed into chips to give polylactic acid (B-22). The thus-obtained polylactic acid (B-22) had a weight average molecular weight (Mw) of $16.0x10^4$, a crystallization point (Tc) of 126°C and a melting point (Tm) of 169°C.

Preparation Example 5: Preparation of polylactic acid 1

50 Parts by weight of the polylactic acid (B-11) obtained in Preparation Example 1, 50 parts by weight of the polylactic acid (B-21) obtained in Preparation Example 2, 0.3 part by weight of sodium 2,2'-methylenebis(4,6-di-tert-butylphenyl) phosphate (ADK STAB NA-11; supplied by ADEKA CORPORATION), 0.3 part by weight of calcium metasilicate (supplied by NACALAI TESQUE, INC.), 0.02 part by weight of trimethyl phosphate (TMP: supplied by DAIHACHI CHEMICAL INDUSTRY CO., LTD.), 0.04 part by weight of bis(2,4-di-tert-butylphenyl)pentaerythritol diphosphite (ADK STAB PEP-24G: supplied by ADEKA CORPORATION) and 0.04 part by weight of a hindered phenol compound (IRGANOX 1076: supplied by Ciba Specialty Chemicals Inc.) were fed to a vented twin-screw extruder having a diameter of 30 mm (TEX30XSST: supplied by the Japan Steel Works, Ltd.), and they were melt-extruded at a cylinder temperature of 250°C, at a screw rotating number of 150 rpm, at an output of 5 kg/h and at a vent pressure reduction degree of 3 kPa and pelletized to give polylactic acid 1.

Preparation Example 6: Preparation of polylactic acid 2

50 Parts by weight of the polylactic acid (B-12) obtained in Preparation Example 3, 50 parts by weight of the polylactic acid (B-22) obtained in Preparation Example 4, 0.3 part by weight of sodium 2,2'-methylenebis(4,6-di-tert-butylphenyl) phosphate (ADK STAB NA-11; supplied by ADEKA CORPORATION), 2.0 parts by weight of a carbodiimide compound (Stabaxol P: supplied by Rhein Chemie Rheinau GmbH), 0.02 part by weight of trimethyl phosphate (TMP: supplied by DAIHACHI CHEMICAL INDUSTRY CO., LTD.), 0.04 part by weight of bis(2,4-di-tert-butylphenyl)pentaerythritol diphosphite (ADK STAB PEP-24G: supplied by ADEKA CORPORATION) and 0.04 part by weight of a hindered phenol compound (IRGANOX 1076: supplied by Ciba Specialty Chemicals Inc.) were fed to a vented twin-screw extruder having a diameter of 30 mm (TEX30XSST: supplied by the Japan Steel Works, Ltd.), and they were melt-extruded at a cylinder temperature of 250°C, at a screw rotating number of 250 rpm, at an output of 9 kg/h and at a vent pressure reduction degree of 3 kPa and pelletized to give polylactic acid 2.

Preparation Example 7: Preparation of polylactic acid 3

50 Parts by weight of the polylactic acid (B-12) obtained in Preparation Example 3, 50 parts by weight of the polylactic acid (B-22) obtained in Preparation Example 4, 0.3 part by weight of sodium 2,2'-methylenebis(4,6-di-tert-butylphenyl) phosphate (ADK STAB NA-11; supplied by ADEKA CORPORATION), 0.3 part by weight of calcium metasilicate (supplied by NACALAI TESQUE, INC.), 2.0 parts by weight of a carbodiimide compound (Calbodilight LA-1: supplied by Nisshinbo Chemical Inc.), 0.02 part by weight of trimethyl phosphate (TMP: supplied by DAIHACHI CHEMICAL INDUSTRY CO., LTD.), 0.04 part by weight of bis(2,4-di-tert-butylphenyl)pentaerythritol diphosphite (ADK STAB PEP-24G: supplied by ADEKA CORPORATION) and 0.04 part by weight of a hindered phenol compound (IRGANOX 1076: supplied by Ciba Specialty Chemicals Inc.) were fed to a vented twin-screw extruder having a diameter of 30 mm (TEX30XSST: supplied by the Japan Steel Works, Ltd.), and they were melt-extruded at a cylinder temperature of 250°C, at a screw rotating number of 250 rpm, at an output of 9 kg/h and at a vent pressure reduction degree of 3 kPa and pelletized to give polylactic acid 3.

Preparation Example 8: Preparation of polylactic acid 4

50 Parts by weight of the polylactic acid (B-12) obtained in Preparation Example 3, 50 parts by weight of the polylactic acid (B-22) obtained in Preparation Example 4, 0.1 part by weight of sodium 2,2'-methylenebis(4,6-di-tert-butylphenyl) phosphate (ADK STAB NA-11; supplied by ADEKA CORPORATION), 0.1 part by weight of calcium metasilicate (supplied by NACALAI TESQUE, INC.), 2.0 parts by weight of a carbodiimide compound (Calbodilight LA-1: supplied by Nisshinbo Chemical Inc.), 1.0 part by weight of talc (P-3: supplied by Nippon Talc Co., Ltd.), 0.02 part by weight of trimethyl phosphate (TMP: supplied by DAIHACHI CHEMICAL INDUSTRY CO., LTD.), 0.04 part by weight of bis(2,4-di-tert-butylphenyl)pentaerythritol diphosphite (ADK STAB PEP-24G: supplied by ADEKA CORPORATION) and 0.04 part by weight of a hindered phenol compound (IRGANOX 1076: supplied by Ciba Specialty Chemicals Inc.) were fed to a vented twin-screw extruder having a diameter of 30 mm (TEX30XSST: supplied by the Japan Steel Works, Ltd.), and they were melt-extruded at a cylinder temperature of 270°C, at a screw rotating number of 250 rpm, at an output of 9 kg/h and at a vent pressure reduction degree of 3 kPa and pelletized to give polylactic acid 4.

Preparation Example 9: Preparation of polylactic acid 5

50 Parts by weight of the polylactic acid (B-12) obtained in Preparation Example 3, 50 parts by weight of the polylactic acid (B-22) obtained in Preparation Example 4, 0.1 part by weight of sodium 2,2'-methylenebis(4,6-di-tert-butylphenyl) phosphate (ADK STAB NA-11; supplied by ADEKA CORPORATION), 2.0 parts by weight of a carbodiimide compound (Stabaxol P: supplied by Rhein Chemie Rheinau GmbH), 1.0 part by weight of talc (P-3: supplied by Nippon Talc Co., Ltd.), 0.02 part by weight of trimethyl phosphate (TMP: supplied by DAIHACHI CHEMICAL INDUSTRY CO., LTD.), 0.04 part by weight of bis(2,4-di-tert-butylphenyl)pentaerythritol diphosphite (ADK STAB PEP-24G: supplied by ADEKA CORPORATION) and 0.04 part by weight of a hindered phenol compound (IRGANOX 1076: supplied by Ciba Specialty Chemicals Inc.) were fed to a vented twin-screw extruder having a diameter of 30 mm (TEX30XSST: supplied by the Japan Steel Works, Ltd.), and they were melt-extruded at a cylinder temperature of 270°C, at a screw rotating number of 250 rpm, at an output of 9 kg/h and at a vent pressure reduction degree of 3 kPa and pelletized to give polylactic acid 5.

Preparation Example 10: Preparation of polylactic acid 6

50 Parts by weight of the polylactic acid (B-12) obtained in Preparation Example 3, 50 parts by weight of the polylactic acid (B-22) obtained in Preparation Example 4, 2.0 parts by weight of a carbodiimide compound (Stabaxol P: supplied by Rhein Chemie Rheinau GmbH), 1.0 part by weight of talc (P-3: supplied by Nippon Talc Co., Ltd.), 0.03 part by weight of trimethyl phosphate (TMP: supplied by DAIHACHI CHEMICAL INDUSTRY CO., LTD.), 0.06 part by weight of bis(2,4-di-tert-butylphenyl)pentaerythritol diphosphite (ADK STAB PEP-24G: supplied by ADEKA CORPORATION) and 0.06 part by weight of a hindered phenol compound (IRGANOX 1076: supplied by Ciba Specialty Chemicals Inc.) were fed to a vented twin-screw extruder having a diameter of 30 mm (TEX30XSST: supplied by the Japan Steel Works, Ltd.), and they were melt-extruded at a cylinder temperature of 270°C, at a screw rotating number of 250 rpm, at an output of 9 kg/h and at a vent pressure reduction degree of 3 kPa and pelletized to give polylactic acid 6.

Preparation Example 11: Preparation of polylactic acid 7

50 Parts by weight of the polylactic acid (B-12) obtained in Preparation Example 3, 50 parts by weight of the polylactic acid (B-22) obtained in Preparation Example 4, 24.0 parts by weight of sodium 2,2'-methylenebis(4,6-di-tert-butylphenyl) phosphate (ADK STAB NA-11; supplied by ADEKA CORPORATION), 2.0 parts by weight of a carbodiimide compound (Stabaxol P: supplied by Rhein Chemie Rheinau GmbH),
1.0 part by weight of talc (P-3: supplied by Nippon Talc Co., Ltd.), 0.02 part by weight of trimethyl phosphate (TMP: supplied by DAIHACHI CHEMICAL INDUSTRY CO., LTD.), 0.04 part by weight of bis(2,4-di-tert-butylphenyl)pentaerythritol diphosphite (ADK STAB PEP-24G: supplied by ADEKA CORPORATION) and 0.04 part by weight of a hindered phenol compound (IRGANOX 1076: supplied by Ciba Specialty Chemicals Inc.) were fed to a vented twin-screw extruder having a diameter of 30 mm (TEX30XSST: supplied by the Japan Steel Works, Ltd.), and they were melt-extruded at a cylinder temperature of 270°C, at a screw rotating number of 250 rpm, at an output of 9 kg/h and at a vent pressure reduction degree of 3 kPa and pelletized to give polylactic acid 7.

<Preparation of pellets of resin composition>

Pellets of resin compositions containing the an aromatic polycarbonate (component A), polylactic acid (component B), phosphoric ester metal salt (component C) and a terminal blocker (component F) were prepared by methods shown in the following Examples and Comparative Examples. Values in Examples were determined by the following methods.

(1) Stereo-complex crystal content (X)

Pellets of a resin composition were measured with DSC in a nitrogen atmosphere at a temperature elevation rate of 20°C/minute, and the stereo-complex crystal content (X) was calculated from a melting enthalpy (ΔHa) of a crystal melting point that appears at lower than 190°C and a melting enthalpy (ΔHb) of a crystal melting point that appears at 190°C or higher but lower than 250°C on the basis of the following expression (I).

$$X(\%) = \{\Delta Hb/(\Delta Ha + \Delta Hb)\} \times 100 \quad (I)$$

<Production of molded article>

Molded articles were produced from obtained pellets of resin compositions by methods shown in the following Examples and Comparative Examples. Further, values in Examples were determined by the following methods.

(1) Stereo-complex crystal content (X)

A molded article was measured with DSC in a nitrogen atmosphere at a temperature elevation rate of 20°C/minute, and the stereo-complex crystal content (X) was calculated from a melting enthalpy (ΔHa) of a crystal melting point that appears at lower than 190°C and a melting enthalpy (ΔHb) of a crystal melting point that appears at 190°C or higher but lower than 250°C on the basis of the following expression (I).

$$X(\%) = \Delta Hb/(\Delta Ha + \Delta Hb) \times 100 \quad (I)$$

(2) Flexural modulus

A test piece was measured for flexural strength on the basis of ISO178. Form of test piece: length 80 mm x width 10 mm x thickness 4 mm.

(3) Heat resistance

A deflection temperature under load was measured under load conditions of 0.45 MPa and 1.80 MPa on the basis of ISO75-1 and 2.

(4) Flame retardancy

A test piece was evaluated for flame retardancy at a test piece thickness of 1.6 mm according to a method (UL94) determined by Underwriter Laboratories, Inc. of the United States (only test pieces containing flame retardants were evaluated).

(5) Hydrolysis resistance

A molded article was treated with a pressure cooker tester under a condition of 120°C x relative humidity of 100% for 8 hours, and it was evaluated for hydrolysis resistance on the basis of a holding ratio of aromatic polycarbonate molecular weight to a counterpart before the treatment.

(6) Chemical resistance

A molded article made after the model of a large-size OA machine was immersed in methanol at room temperature for 1 week, its surface state was visually observed, and evaluated on the basis of the following ratings.

◎: No change
○: Surface roughening is slightly observed, while it has no problem as a commercial product.
x: Surface roughening is observed, and it is not feasible as a commercial product.

<Raw materials>

The following materials were used as raw materials.

(Component A)

A-1: Aromatic polycarbonate powder (Panlite L-1250WP: supplied by Teijin Chemicals, Ltd., viscosity average molecular weight 23,900).

(Component C)

C-1: Sodium 2,2'-methylenebis(4,6-di-tert-butylphenyl) phosphate (ADK STAB NA-11: supplied by ADEKA

CORPORATION)

(Component D)

D-1: Calcium metasilicate (supplied by NACALAI TESQUE, INC.)

(Component E)

E-1: Glass fiber (ECS-03T-511: supplied by Nippon Electric Glass Company, Limited, chopped strands having an average diameter of 13 μm and a cut length of 3 mm)
E-2: Talc (HST-0.8: supplied by Hayashi-Kasei Co., Ltd.)

(Component F)

F-1: Carbodiimide compound (Calbodilight LA-1: supplied by Nisshinbo Chemical Inc.)
F-2: Carbodiimide compound (Stabaxol P: supplied by Rhein Chemie Rheinau GmbH)

(Other components)

(Other crystal nucleating agents)

G-1: Talc (P-3: supplied by Nippon Talc Co., Ltd., average particle diameter 3 μm)

(Stabilziers)

H-1: Trimethyl phosphate (TMP: supplied by DAIHACHI CHEMICAL INDUSTRY CO., LTD.)
H-2: bis(2,4-di-tert-butylphenyl)pentaerythritol diphosphite (ADK STAB PEP-24G: supplied by ADEKA CORPORATION)
H-3: Hindered phenol compound (IRGANOX 1076: supplied by Ciba Specialty Chemicals Inc.)

(Flame retardants)

I-1: Phosphoric-ester-containing flame retardant (PX-200: supplied by DAIHACHI CHEMICAL INDUSTRY CO., LTD.)
I-2: Polytetrafluoroethylene having fibril-forming ability (Polyfuron MPA FA-500: supplied by Daikin Industries LTD.)
I-3: Bromine-containing flame retardant (FIRE GUARD 7000: supplied by Teijin Chemicals, Ltd.)
I-4: Antimony trioxide (PATOX-M: supplied by Nippon Seiko Co., Ltd.)

Examples 1 - 2 and Comparative Example 5

The aromatic polycarbonate (component A), the polylactic acid (component B), the phosphoric ester metal salt (component C), the triclinic inorganic nucleating agent (component D), the terminal blocker (component F) and the stabilizer were uniformly mixed by means of a tumbler preliminarily to ensure that a composition shown in Table 1 are obtained. Then, the preliminary mixture was fed to a vented twin-screw extruder having a diameter of 30 mm (TEX30XSST: supplied by the Japan Steel Works, Ltd.) through its first feed port, and melt-extruded at a cylinder temperature of 250°C, at a screw rotating number of 150 rpm, at an output of 20 kg/h and at a vent pressure reduction degree of 3 kPa to form

pellets.

Examples 3 - 13

The polylactic acids 1 to 5 (component B) prepared in Preparation Examples 5 to 9, the aromatic polycarbonate (component A), the terminal blocker (component F), the nucleating agent other than the components C and D and the stabilizer were uniformly mixed by means of a tumbler preliminarily such that a composition shown in Table 1 was obtained. Then, the preliminary mixture was fed to a vented twin-screw extruder having a diameter of 30 mm (TEX30XSST: supplied by the Japan Steel Works, Ltd.) through its first feed port, and melt-extruded at a cylinder temperature of 250°C, at a screw rotating number of 150 rpm, at an output of 20 kg/h and at a vent pressure reduction degree of 3 kPa to form pellets. In Table 1, parenthesized values refer to values by part(s) by weight of components contained already in the polylactic acids 1 to 5 prepared in Preparation Examples 5 to 9, and non-parenthesized values refer to values by part(s) by weight of components in resin compositions.

Comparative Examples 1 and 3

All of the aromatic polycarbonate (component A), the polylactic acid (component B), the terminal blocker (component F), the crystal nucleating agent other than the components C and D and the stabilizer were uniformly and preliminarily mixed for a composition shown in Table 1 by means of a tumbler. Then, the preliminary mixture was fed to a vented twin-screw extruder having a diameter of 30 mm (TEX30XSST: supplied by the Japan Steel Works, Ltd.) through its first feed port, and was melt-extruded at a cylinder temperature of 250°C, at a screw rotating number of 150 rpm, at an output of 20 kg/h and at a vent pressure reduction degree of 3 kPa to form pellets.

Comparative Examples 2 and 4

All of the polylactic acid 6 or 7 (component B) prepared in Preparation Examples 10 or 11, the aromatic polycarbonate (component A) and the stabilizer were uniformly and preliminarily mixed for a composition shown in Table 1 by means of a tumbler. Then, the preliminary mixture was fed to a vented twin-screw extruder having a diameter of 30 mm (TEX30XSST: supplied by the Japan Steel Works, Ltd.) through its first feed port, and melt-extruded at a cylinder temperature of 250°C, at a screw rotating number of 150 rpm, at an output of 20 kg/h and at a vent pressure reduction degree of 3 kPa to form pellets. In Table 1, parenthesized values refer to values by part(s) by weight of components contained already in the polylactic acids 6 and 7 prepared in Preparation Examples 10 and 11, and non-parenthesized values refer to values by part(s) by weight of components in resin compositions.

Examples 14 - 27

The polylactic acids 2 to 5 (component B) prepared in Preparation Examples 6 to 9, the aromatic polycarbonate (component A), the inorganic filler (component E), the stabilizer and the flame retardant for obtaining a composition shown in Table 2 were melt-extruded by means of a vented twin-screw extruder having a diameter of 30 mm (TEX30XSST: supplied by the Japan Steel Works, Ltd.) at a cylinder temperature of 250°C, at a screw rotating number of 150 rpm, at an output of 20 kg/h and at a vent pressure reduction degree of 3 kPa to form pellets. In Table 2, parenthesized values refer to values by part(s) by weight of components contained already in the polylactic acids 2 to 5 prepared in Preparation Examples 6 to 9, and non-parenthesized values refer to values by part(s) by weight of components in resin compositions. When a composition for extrusion was fed to the extruder, only a component E-1 as the inorganic filler was fed through a second feed port by the use of a side feeder, and all of the remaining components were preliminarily mixed by means of a tumbler and fed through a first feed port. Further, the flame retardant as component I-2 (polytetrafluoroethylene having a fibril-forming ability) was uniformly mixed with the aromatic polycarbonate A-1 such that it had a concentration of 2.5 % by weight therein, and such a mixture was supplied to a tumbler.

Comparative Examples 6 - 8

The polylactic acid (component B), the aromatic polycarbonate (component A), the inorganic filler (component E), the terminal blocker (component F), the crystal nucleating agent other than the components C and D and the stabilizer were melt-extruded by means of a vented twin-screw extruder having a diameter of 30 mm (TEX30XSST: supplied by the Japan Steel Works, Ltd.) at a cylinder temperature of 250°C, at a screw rotating number of 150 rpm, at an output of 20 kg/h and at a vent pressure reduction degree of 3 kPa to form pellets. When a composition for extrusion was fed to the extruder, a component E-1 as the inorganic filler was fed through a second feed port by the use of a side feeder, and all of the remaining components were preliminarily mixed by means of a tumbler and fed through a first feed port.

In the above Preparation Examples 5 to 11, and all the Examples and Comparative Examples, the twin-screw extruder had a screw constitution having a first-stage kneading zone (constituted of a feeding kneading disc x 2, a feeding rotor x 1, a returning rotor x 1 and a returning kneading disc x 1) provided before the position of the side feeder and a second-stage kneading zone (constituted of a feeding rotor x 1 and a returning rotor x 1) provided after the position of the side feeder.

The thus-obtained resin composition pellets were measured for stereo-complex crystal contents X (%).

<Molding to prepare test pieces>

The resin composition pellets were then dried with a hot air circulating dryer at 100°C for 5 hours. After dried, the pellets were molded with an injection molding machine (IS-150EN: supplied by Toshiba Machine Co., Ltd.) at a cylinder temperature of 240°C, a mold temperature of 120°C and a molding cycle of 120 seconds to prepare test pieces for the evaluations of a flexural modulus, a deflection temperature under load and combustibility. In Comparative Examples 1 and 6, molded articles were insufficiently solidified at a mold temperature of 120°C, and their molding was impossible, so that the test pieces were prepared at a mold temperature of 40°C under a condition of a molding cycle of 60 seconds. These molded articles were measured for properties, and Tables 1 and 2 show the results.

<Molding to prepare large-size molded article>

Further, the dried pellets were molded with an injection molding machine (J1300E-C5: supplied by the Japan Steel Works, Ltd.) at a cylinder temperature of 250°C, a mold temperature of 110°C and a molding cycle of 100 seconds to obtain molded articles designed after a large-size OA machine part shown in Fig. 1. In Comparative Examples 1 and 6, molded articles were insufficiently solidified at a mold temperature of 110°C, and their molding was impossible, so that the molding was carried out at a mold temperature of 40°C under a condition of a molding cycle of 80 seconds. Samples were taken out from center portions of the thus-obtained molded articles, and evaluated for stereo-complex crystal contents, chemical resistance and hydrolysis resistance. Tables 1 and 2 also show these results together.

Table 1

| | | | | CEx. 5 | Ex. 1 | Ex. 2 | Ex. 3 | Ex. 4 | Ex. 5 | Ex. 6 | Ex. 7 | Ex. 8 |
|---|---|---|---|---|---|---|---|---|---|---|---|---|
| Resin composition (part by weight) | Component A | A-1 | | 50.0 | 50.0 | 50.0 | 75.0 | 50.0 | 75.0 | 50.0 | 25.0 | 50.0 |
| | Component B | Polylactic acid (B-11) | | 25.0 | - | - | - | - | - | - | - | - |
| | | Polylactic acid (B-21) | | 25.0 | - | - | - | - | - | - | - | - |
| | | Polylactic acid (B-12) | | - | 25.0 | 25.0 | 12.5 (12.5) | 25.0 (25.0) | 12.5 (12.5) | 25.0 (25.0) | 37.5 (37.5) | 25.0 (25.0) |
| | | Polylactic acid (B-22) | | - | 25.0 | 25.0 | 12.5 (12.5) | 25.0 (25.0) | 12.5 (12.5) | 25.0 (25.0) | 37.5 (37.5) | 25.0 (25.0) |
| | | L-polylactic acid (LACEA H-400) | | - | - | - | - | - | - | - | - | - |
| | | Note | Polylactic acid used; Use of the polylactic acids in Preparation Examples 5 to 9 | - | - | - | Poly-lactic acid 1 | Poly-lactic acid 1 | Poly-lactic acid 2 | Poly-lactic acid 2 | Poly-lactic acid 2 | Poly-lactic acid 3 |
| | Component C | C-1 | | 0.15 | 0.15 | 0.15 | 0.08 (0.08) | 0.15 (0.15) | 0.08 (0.08) | 0.15 (0.15) | 0.22 (0.22) | 0.15 (0.15) |
| | Component D | D-1 | | - | - | 0.15 | 0.08 (0.08) | 0.15 (0.15) | - | - | - | 0.15 (0.15) |
| | Component E | E-1 | | - | - | - | - | - | - | - | - | - |
| | | E-2 | | - | - | - | - | - | - | - | - | - |
| | Component F | F-1 | | - | - | - | 0.50 | - | - | - | - | 1.00 (1.00) |
| | | F-2 | | - | 1.00 | 1.00 | - | 1.00 | 0.50 (0.50) | 1.00 (1.00) | 1.50 (1.50) | - |

Ex. = Example, CEx. = Comparative Example

Table 1 (continued)

| | | | Ex. 9 | Ex. 10 | Ex. 11 | Ex. 12 | Ex. 13 | CEx. 1 | CEx. 2 | CEx. 3 | CEx. 4 |
|---|---|---|---|---|---|---|---|---|---|---|---|
| Resin composition (part by weight) | Component A | A-1 | 75.0 | 50.0 | 25.0 | 50.0 | 25.0 | 50.0 | 50.0 | 25.0 | 50.0 |
| | Component B | Polylactic acid (B-11) | - | - | - | - | - | - | - | - | - |
| | | Polylactic acid (B-21) | - | - | - | - | - | - | - | - | - |
| | | Polylactic acid (B-12) | 12.5 (12.5) | 25.0 (25.0) | 37.5 (37.5) | 25.0 (25.0) | 37.5 (37.5) | - | 25.0 (25.0) | 37.5 | 25.0 (25.0) |
| | | Polylactic acid (B-22) | 12.5 (12.5) | 25.0 (25.0) | 37.5 (37.5) | 25.0 (25.0) | 37.5 (37.5) | - | 25.0 (25.0) | 37.5 | 25.0 (25.0) |
| | | L-polylactic acid (LACEA H-400) | - | - | - | - | - | 50.0 | - | - | - |
| | | Note: Polylactic acid used; Use of the polylactic acids in Preparation Examples 5 to 9 | Polyl-actic acid 4 | Poly-lactic acid 4 | Poly-lactic acid 4 | Poly-lactic acid 5 | Poly-lactic acid 5 | - | Poly-lactic acid 6 | - | Poly-lactic acid 7 |
| | Component C | C-1 | 0.03 (0.03) | 0.05 (0.05) | 0.08 (0.08) | 0.05 (0.05) | 0.08 (0.08) | - | - | - | 12.0 (12.0) |
| | Component D | D-1 | 0.03 (0.03) | 0.05 (0.05) | 0.08 (0.08) | - | - | - | - | - | - |
| | Component E | E-1 | - | - | - | - | - | - | - | - | - |
| | | E-2 | - | - | - | - | - | - | - | - | - |
| | Component F | F-1 | 0.50 (0.50) | 1.00 (1.00) | 1.50 (1.50) | - | - | - | - | - | - |
| | | F-2 | - | - | - | 1.00 (1.00) | 1.50 (1.50) | 1.00 | 1.00 (1.00) | 1.50 | 1.00 (1.00) |

Ex. = Example, CEx. = Comparative Example

Table 1 (continued)

| | | | | CEx. 5 | Ex. 1 | Ex. 2 | Ex. 3 | Ex. 4 | Ex. 5 | Ex. 6 | Ex. 7 | Ex. 8 |
|---|---|---|---|---|---|---|---|---|---|---|---|---|
| Resin Composition (part by weight) | Other components | Other nucleating agent | G-1 | - | - | - | - | - | - | - | 0.75 | - |
| | | Stabilizer | H-1 | 0.03 | 0.03 | 0.03 | 0.03 (0.005) | 0.03 (0.01) | 0.03 (0.005) | 0.03 (0.01) | 0.03 (0.015) | 0.03 (0.01) |
| | | | H-2 | 0.06 | 0.06 | 0.06 | 0.06 (0.01) | 0.06 (0.02) | 0.06 (0.01) | 0.06 (0.02) | 0.06 (0.03) | 0.06 (0.02) |
| | | | H-3 | 0.06 | 0.06 | 0.06 | 0.06 (0.01) | 0.06 (0.02) | 0.06 (0.01) | 0.06 (0.02) | 0.06 (0.03) | 0.06 (0.02) |
| | | Flame retardant | I-1 | - | - | - | - | - | - | - | - | - |
| | | | I-2 | - | - | - | - | - | - | - | - | - |
| | | | I-3 | - | - | - | - | - | - | - | - | - |
| | | | I-4 | - | - | - | - | - | - | - | - | - |
| Resin composition X(%) | | | | 92 | 89 | 95 | 100 | 100 | 100 | 100 | 100 | 100 |
| Molded article | Properties | | Molded article X(%) | 91 | 90 | 93 | 100 | 100 | 100 | 100 | 100 | 100 |
| | | | Flexural modulus(MPa) | 2850 | 2840 | 2860 | 2520 | 2820 | 2530 | 2840 | 3140 | 2800 |
| | | | 0.45 MPa HDT (°C) | 131 | 133 | 130 | 139 | 133 | 140 | 135 | 126 | 133 |
| | | | 1.80 MPa HDT (°C) | 104 | 102 | 105 | 117 | 106 | 118 | 105 | 72 | 106 |
| | | | Hydrolysis resistance [Molecular weight holding ratio (%)] | 21 | 71 | 70 | 73 | 75 | 85 | 78 | 71 | 74 |
| | | | Combustibility (UL94) | - | - | - | - | - | - | - | - | - |
| | | | Chemical resistance | ○ | ◎ | ◎ | ◎ | ◎ | ◎ | ◎ | ◎ | ◎ |

Ex. = Example, CEx. = Comparative Example

Table 1 (continued)

| | | | | Ex. 9 | Ex. 10 | Ex. 11 | Ex. 12 | Ex. 13 | CEx. 1 | CEx. 2 | CEx. 3 | CEx. 4 |
|---|---|---|---|---|---|---|---|---|---|---|---|---|
| Resin composition (part by weight) | Other components | Other nucleating agent | G-1 | 0.25 (0.25) | 0.50 (0.50) | 0.75 (0.75) | 0.50 (0.50) | 0.75 (0.75) | 0.50 | 050 (0.50) | 0.75 | 050 (0.50) |
| | | Stabilizer | H-1 | 0.03 (0.005) | 0.03 (0.01) | 0.03 (0.015) | 0.03 (0.01) | 0.03 (0.015) | 0.03 | 0.03 (0.01) | 0.03 | 0.03 (0.015) |
| | | | H-2 | 0.06 (0.01) | 0.06 (0.02) | 0.06 (0.03) | 0.06 (0.02) | 0.06 (0.03) | 0.06 | 0.06 (0.01) | 0.06 | 0.06 (0.03) |
| | | | H-3 | 0.06 (0.01) | 0.06 (0.02) | 0.06 (0.03) | 0.06 (0.02) | 0.06 (0.03) | 0.06 | 0.06 (0.02) | 0.06 | 0.06 (0.03) |
| | | Flame retardant | I-1 | - | - | - | - | - | - | - | - | - |
| | | | I-2 | - | - | - | - | - | - | - | - | - |
| | | | I-3 | - | - | - | - | - | - | - | - | - |
| | | | I-4 | - | - | - | - | - | - | - | - | - |
| Resin composition X(%) | | | | 100 | 100 | 100 | 100 | 100 | - | 67 | 62 | 100 |
| Molded article | Properties | | Molded article X(%) | 100 | 100 | 100 | 100 | 100 | - | 65 | 58 | 100 |
| | | | Flexural modulus (MPa) | 2510 | 2810 | 3120 | 2820 | 3140 | 2860 | 2850 | 3180 | 2790 |
| | | | 0.45 MPa HDT (°C) | 138 | 135 | 127 | 137 | 125 | 110 | 127 | 63 | 129 |
| | | | 1.80 MPa HDT (°C) | 117 | 105 | 71 | 108 | 74 | 61 | 63 | 56 | 59 |
| | | | Hydrolysis resistance [Molecular weight holding ratio (%)] | 81 | 74 | 70 | 76 | 72 | 62 | 59 | 58 | 65 |
| | | | Combustibility (UL94) | - | - | - | - | - | - | - | - | - |
| | | | Chemical resistance | ◎ | ◎ | ◎ | ◎ | ◎ | × | ○ | ○ | ○ |

Ex. = Example, CEx. = Comparative Example

Table 2

| | | | Ex. 14 | Ex. 15 | Ex. 16 | Ex. 17 | Ex. 18 | Ex. 19 | Ex. 20 | Ex. 21 | Ex. 22 |
|---|---|---|---|---|---|---|---|---|---|---|---|
| Resin composition (part by weight) | Component A | A-1 | 75.0 | 25.0 | 60.0 | 40.0 | 75.0 | 50.0 | 25.0 | 75.0 | 50.0 |
| | Component B | Polylactic acid (B-11) | - | - | - | - | - | - | - | - | - |
| | | Polylactic acid (B-21) | - | - | - | - | - | - | - | - | - |
| | | Polylactic acid (B-12) | 12.5 (12.5) | 37.5 (37.5) | 20.0 (20.0) | 30.0 (30.0) | 12.5 (12.5) | 25.0 (25.0) | 37.5 (37.5) | 12.5 (12.5) | 25.0 (25.0) |
| | | Polylactic acid (B-22) | 12.5 (12.5) | 37.5 (37.5) | 20.0 (20.0) | 30.0 (30.0) | 12.5 (12.5) | 25.0 (25.0) | 37.5 (37.5) | 12.5 (12.5) | 25.0 (25.0) |
| | | L-polylactic acid (LACEA H-400) | - | - | - | - | - | - | - | - | - |
| | | Note: Polylactic acid used; Use of the polylactic acids in Preparation Examples 5 to 9 | Poly-lactic acid 2 | Poly-lactic acid 2 | Poly-lactic acid 2 | Poly-lactic acid 3 | Poly-lactic acid 4 | Poly-lactic acid 4 | Poly-lactic acid 4 | Poly-lactic acid 5 | Poly-lactic acid 5 |
| | Component C | C-1 | 0.08 (0.08) | 0.22 (0.22) | 0.12 (0.12) | 0.18 (0.18) | 0.03 (0.03) | 0.05 (0.05) | 0.08 (0.08) | 0.03 (0.03) | 0.05 (0.05) |
| | Component D | D-1 | - | - | - | 0.18 (0.18) | 0.03 (0.03) | 0.05 (0.05) | 0.08 (0.08) | - | - |
| | Component E | E-1 | - | - | 42.9 | 42.9 | - | - | 11.1 | 11.1 | 11.1 |
| | | E-2 | 11.1 | 11.1 | - | - | 11.1 | 11.1 | - | - | - |
| | Component F | F-1 | - | - | - | 1.20 (1.20) | 0.50 (0.50) | 1.00 (1.00) | 1.50 (1.50) | - | - |
| | | F-2 | 0.50 (0.50) | 1.50 (1.50) | 0.80 (0.80) | - | - | - | - | 0.50 (0.50) | 1.00 (1.00) |

Ex. = Example

Table 2 (continued)

| | | | Ex. 23 | Ex. 24 | Ex. 25 | Ex. 26 | Ex. 27 | CEx. 6 | CEx. 7 | CEx. 8 |
|---|---|---|---|---|---|---|---|---|---|---|
| Resin composition (part by weight) | Component A | A-1 | 25.0 | 25.0 | 25.0 | 60.0 | 40.0 | 75.0 | 25.0 | 50.0 |
| | Component B | Polylactic acid (B-11) | - | - | - | - | - | - | - | - |
| | | Polylactic acid (B-21) | - | - | - | - | - | - | - | - |
| | | Polylactic acid (B-12) | 37.5 (37.5) | 37.5 (37.5) | 37.5 (37.5) | 20.0 (20.0) | 30.0 (30.0) | - | - | - |
| | | Polylactic acid (B-22) | 37.5 (37.5) | 37.5 (37.5) | 37.5 (37.5) | 20.0 (20.0) | 30.0 (30.0) | - | - | - |
| | | L-polylactic acid (LACEA H-400) | - | - | - | - | - | 25.0 | 75.0 | 50.0 |
| | | Note: Polylactic acid used; Use of the polylactic acids in Preparation Examples 5 to 9 | Poly-lactic acid 5 | Poly-lactic acid 4 | Poly-lactic acid 5 | Poly-lactic acid 5 | Poly-lactic acid 5 | - | - | - |
| | Component C | C-1 | 0.08 (0.08) | 0.08 (0.08) | 0.08 (0.08) | 0.04 (0.04) | 0.06 (0.06) | - | - | - |
| | Component D | D-1 | - | 0.08 (0.08) | - | - | - | - | - | - |
| | Component E | E-1 | 11.1 | 50.4 | 50.5 | 55.0 | 75.8 | - | 11.1 | 11.1 |
| | | E-2 | - | - | - | - | - | 11.1 | - | - |
| | Component F | F-1 | - | 1.50 (1.50) | - | - | - | 0.50 | 1.50 | - |
| | | F-2 | 1.50 (1.50) | - | 1.50 (1.50) | 0.80 (0.80) | 1.20 (1.20) | - | - | 1.00 |

Ex. = Example, CEx. = Comparative Example

Table 2 (continued)

| | | | | Ex. 14 | Ex. 15 | Ex. 16 | Ex. 17 | Ex. 18 | Ex. 19 | Ex. 20 | Ex. 21 | Ex. 22 |
|---|---|---|---|---|---|---|---|---|---|---|---|---|
| Resin composition (part by weight) | Other component | Other nucleating agent | G-1 | - | - | - | - | 0.25 (0.25) | 0.50 (0.50) | 0.75 (0.75) | 0.25 (0.25) | 0.50 (0.50) |
| | | Stabilizer | H-1 | 0.03 (0.005) | 0.03 (0.015) | 0.03 (0.008) | 0.03 (0.012) | 0.03 (0.005) | 0.03 (0.01) | 0.03 (0.015) | 0.03 (0.005) | 0.03 (0.01) |
| | | | H-2 | 0.06 (0.01) | 0.06 (0.03) | 0.06 (0.016) | 0.06 (0.024) | 0.06 (0.01) | 0.06 (0.02) | 0.06 (0.03) | 0.06 (0.01) | 0.06 (0.02) |
| | | | H-3 | 0.06 (0.01) | 0.06 (0.03) | 0.06 (0.016) | 0.06 (0.024) | 0.06 (0.01) | 0.06 (0.02) | 0.06 (0.03) | 0.06 (0.01) | 0.60 (0.02) |
| | | Flame retardant | I-1 | - | - | - | - | - | - | - | - | - |
| | | | I-2 | - | - | - | - | - | - | - | - | - |
| | | | I-3 | - | - | - | - | - | - | - | - | - |
| | | | I-4 | - | - | - | - | - | - | - | - | - |
| Resin composition X(%) | | | | 100 | 100 | 100 | 100 | 100 | 100 | 100 | 100 | 100 |
| Molded article | Properties | | Molded article X(%) | 100 | 100 | 100 | 100 | 100 | 100 | 100 | 100 | 100 |
| | | | Flexural modulus (MPa) | 3420 | 3740 | 9640 | 9630 | 3440 | 3460 | 5010 | 4330 | 4540 |
| | | | 0.45 MPa HDT (°C) | 141 | 131 | 148 | 182 | 142 | 138 | 203 | 151 | 163 |
| | | | 1.80 MPa HDT (°C) | 123 | 71 | 126 | 145 | 124 | 97 | 143 | 138 | 136 |
| | | | Hydrolysis resistance [Molecular weight holding ratio (%)] | 82 | 73 | 79 | 76 | 85 | 78 | 74 | 81 | 79 |
| | | | Combustibility (UL94) | - | - | - | - | - | - | - | - | - |
| | | | Chemical resistance | ◎ | ◎ | ◎ | ◎ | ◎ | ◎ | ◎ | ◎ | ◎ |

Ex. = Example

Table 2 (continued)

| | | | | Ex. 23 | Ex. 24 | Ex. 25 | Ex. 26 | Ex. 27 | CEx. 6 | CEx. 7 | CEx. 8 |
|---|---|---|---|---|---|---|---|---|---|---|---|
| Resin composition (part by weight) | Other component | Other nucleating agent | G-1 | 0.75 (0.75) | 0.75 (0.75) | 0.75 (0.75) | 0.40 (0.40) | 0.60 (0.60) | - | 0.75 | 0.50 |
| | | Stabilizer | H-1 | 0.03 (0.015) | 0.03 (0.015) | 0.03 (0.015) | 0.03 (0.008) | 0.03 (0.012) | 0.03 | 0.03 | 0.03 |
| | | | H-2 | 0.06 (0.03) | 0.06 (0.03) | 0.06 (0.03) | 0.06 (0.016) | 0.06 (0.024) | 0.06 | 0.06 | 0.06 |
| | | | H-3 | 0.06 (0.03) | 0.06 (0.03) | 0.06 (0.03) | 0.06 (0.016) | 0.06 (0.024) | 0.06 | 0.06 | 0.06 |
| | | Flame retardant | I-1 | - | 16.7 | 16.8 | - | - | - | - | - |
| | | | I-2 | - | 0.6 | 0.6 | 0.7 | 1.0 | - | - | - |
| | | | I-3 | - | - | - | 18.3 | 50.5 | - | - | - |
| | | | I-4 | - | - | - | 9.2 | 25.3 | - | - | - |
| Resin composition X(%) | | | | 100 | 100 | 100 | 100 | 100 | - | - | - |
| Molded article | Properties | | Molded article X(%) | 100 | 100 | 100 | 100 | 100 | - | - | - |
| | | | Flexural modulus (MPa) | 5020 | 9650 | 9640 | 9470 | 9790 | 3640 | 4800 | 4600 |
| | | | 0.45 MPa HDT (°C) | 202 | 201 | 204 | 144 | 173 | 137 | 61 | 141 |
| | | | 1.80 MPa HDT (°C) | 142 | 145 | 143 | 129 | 134 | 115 | 58 | 63 |
| | | | Hydrolysis resistance [Molecular weight holding ratio (%)] | 74 | 76 | 73 | 81 | 77 | 65 | 59 | 61 |
| | | | Combustibility (UL94) | - | V-2 | V-2 | V-2 | V-2 | - | - | - |
| | | | Chemical resistance | ◎ | ◎ | ◎ | ◎ | ◎ | × | × | × |

Ex. = Example, CEx. = Comparative Example

As is clear from the results in Tables 1 and 2, it is seen that when the resin composition obtained from the aromatic polycarbonate (component A) and the composition containing the polylactic acid composed mainly of L-lactic acid unit and the polylactic acid composed mainly of D-lactic acid unit contains the phosphoric ester metal salt (component C) and the terminal blocker (component F), the polylactic acid components come to easily form a stereo-complex crystal.

It is also seen that the resin composition containing the phosphoric ester metal salt (component C) and the terminal blocker (component F) gives a molded article having a high stereo-complex crystal content, and that the molded article exhibits high heat resistance and hydrolysis resistance.

It is also seen that when the polylactic acid composed mainly of L-lactic acid unit and the polylactic acid composed mainly of D-lactic acid unit are mixed in advance of mixing them with the aromatic polycarbonate in the process of producing the polylactic acid component, there can be obtained a molded article having a further higher stereo-complex crystal content, and that the molded article is further improved in heat resistance.

Further, it is also seen that stereo-complex crystals having high melting points can be connected by incorporating the inorganic filler (component F), and that the molded article is hence further improved not only in mechanical properties but also in heat resistance. It is also seen that when the flame retardant is incorporated, the molded article is further improved in flame retardancy.

Effect of the Invention

The resin composition of this invention contains the aromatic polycarbonate (component A) and also contains the polylactic acid (component B), the phosphoric ester metal salt (component C) and the terminal blocker (component F), and it has excellent heat resistance, mechanical properties and hydrolysis resistance. Moreover, it is a resin composition whose environmental burden is reduced.

Industrial Utility

The resin composition of this invention is useful in various fields of various electronic-electric appliances and machines, OA machines and devices, automotive parts, machine parts and others including agricultural materials, fishing industry materials, packaging containers, game machines, groceries, and the like, and it produces industrially remarkable effects.

## Claims

**1.** A resin composition comprising

(i) a resin component containing 95 to 5 % by weight of an aromatic polycarbonate (component A) and 5 to 95 % by weight of polylactic acid (component B),
(ii) 0.001 to 10 parts by weight, per 100 parts by weight of the resin component, of a phosphoric ester metal salt (component C), and
(iii) 0.01 to 5 parts by weight, per 100 parts by weight of the polylactic acid (component B), of a terminal blocker (component F),
(iv) 0.05 to 50 parts by weight, per 100 parts by weight of the resin component of resorcinol bis(dixylenyl phosphate) (component I),

the stereo-complex crystal content (X) of the following expression (I) being 80 % or more,

$$X\ (\%) = \{\Delta Hb/(\Delta Ha + \Delta Hb)\} \times 100 \qquad (I)$$

wherein $\Delta Ha$ and $\Delta Hb$ are a melting enthalpy ($\Delta Ha$) of a crystal melting point that appears at lower than 190°C and a melting enthalpy ($\Delta Hb$) of a crystal melting point that appears at 190°C or higher but less than 250°C, respectively, in a temperature-elevation process by a differential scanning calorimeter (DSC).

**2.** The resin composition of claim 1, wherein the polylactic acid (component B) contains polylactic acid (component B-1) composed mainly of L-lactic acid and polylactic acid (component B-2) composed mainly of D-lactic acid, the component B-1 and the component B-2 having a weight ratio (B-1/B-2) of 10/90 to 90/10.

3. The resin composition of claim 1 or 2, wherein the polylactic acid (component B) has a weight average molecular weight of 120,000 or more.

4. The resin composition of any one of claims 1 to 3, wherein the phosphoric ester metal salt (component C) is a compound of the following formula (1) or (2),

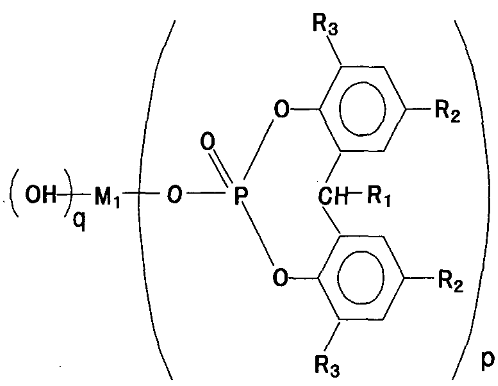

(1)

wherein $R_1$ is a hydrogen atom or an alkyl group having 1 to 4 carbon atoms, each of $R_2$ and $R_3$ is independently a hydrogen atom or an alkyl group having 1 to 12 carbon atoms, $M_1$ is an alkali metal atom, an alkaline earth metal atom, a zinc atom or an aluminum atom, p is 1 or 2, and q is 0 when $M_1$ is an alkali metal atom, an alkaline earth metal atom or a zinc atom, or is 1 or 2 when $M_1$ is an aluminum atom,

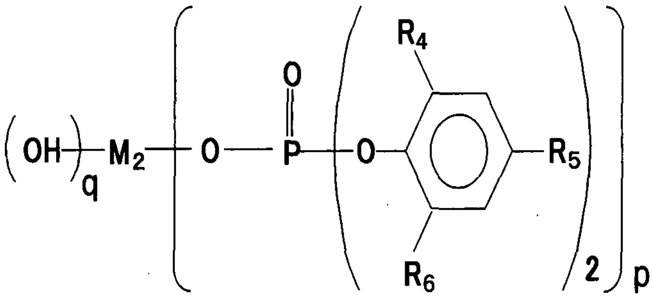

(2)

wherein each of $R_4$, $R_5$ and $R_6$ is independently a hydrogen atom or an alkyl group having 1 to 12 carbon atoms, $M_2$ is an alkali metal atom, an alkaline earth metal atom, a zinc atom or an aluminum atom, p is 1 or 2, and q is 0 when $M_2$ is an alkali metal atom, an alkaline earth metal atom or a zinc atom, or is 1 or 2 when $M_2$ is an aluminum atom.

5. The resin composition of any one of claims 1 to 4, wherein the phosphoric ester metal salt (component C) is sodium 2,2'-methylenebis(4,6-di-tert-butylphenyl) phosphate.

6. The resin composition of any one of claims 1 to 5, wherein the phosphoric ester metal salt (component C) has an average particle diameter measured by a static scattering method using an argon laser or helium laser of 0.01 μm or more but less than 10 μm.

7. The resin composition of any one of claims 1 to 6, wherein the terminal blocker (component F) is a carbodiimide compound.

8. The resin composition of claim 7, wherein the carbodiimide compound is an aromatic polycarbodiimide compound or an aliphatic polycarbodiimide compound.

9. The resin composition of any one of claims 1 to 8, which contains 0.001 to 10 parts by weight, per 100 parts by weight of the resin component, of a triclinic inorganic nucleating agent (component D).

10. The resin composition of claim 9, wherein the triclinic inorganic nucleating agent (component D) is calcium metasilicate.

**11.** The resin composition of claim 10, wherein the triclinic inorganic nucleating agent has an average particle diameter measured by a static scattering method using an argon laser or helium laser of 0.1 μm or more but less than 10 μm.

**12.** The resin composition of any one of claims 1 to 11, which contains 0.3 to 200 parts by weight, per 100 parts by weight of the resin component, of an inorganic filler (component E).

**13.** The resin composition of claim 12, wherein the inorganic filler (component E) is talc.

**14.** A process for producing the resin composition recited in claim 1, which comprises the steps of

(i) mixing polylactic acid (component B-1) composed mainly of L-lactic acid, polylactic acid (component B-2) composed mainly of D-lactic acid and phosphoric ester metal salt (component C) and heating the mixture, and
(ii) mixing the thus-obtained mixture, an aromatic polycarbonate (component A), a terminal blocker (component F) and resorcinol bis(dixylenyl phosphate) (component I).

**15.** A molded article formed of the resin composition recited in any one of claims 1 to 13.

**Patentansprüche**

**1.** Harzzusammensetzung, umfassend

(i) eine Harzkomponente, enthaltend 95 bis 5 Gew.-% eines aromatischen Polycarbonats (Komponente A) und 5 bis 95 Gew.-% Polymilchsäure (Komponente B),
(ii) 0,001 bis 10 Gewichtsteile pro 100 Gewichtsteile der Harzkomponente eines Phosphorsäureestermetallsalzes (Komponente C) und
(iii) 0,01 bis 5 Gewichtsteile pro 100 Gewichtsteile der Polymilchsäure (Komponente B) eines Endblockierungsmittels (Komponente F),
(iv) 0,05 bis 50 Gewichtsteile pro 100 Gewichtsteile der Harzkomponente Resorcinol-bis(dixylenylphosphat) (Komponente I),

wobei der Stereo-Komplex-Kristall-Gehalt (X) gemäß dem folgenden Ausdruck (I) 80% oder mehr beträgt,

$$X\ (\%) = \{\Delta Hb/(\Delta Ha + \Delta Hb)\} \times 100 \qquad (I)$$

wobei gilt: ΔHa und ΔHb sind eine Schmelzenthalpie (ΔHa) eines Kristallschmelzpunkts, der unterhalb von 190°C auftritt, bzw. eine Schmelzenthalpie (ΔHb) eines Kristallschmelzpunkts, der bei 190°C oder mehr, aber weniger als 250°C auftritt, und zwar bei einem Temperaturerhöhungsprozess durch ein Differentialabtastkalorimeter (differential scanning calorimeter, DSC).

**2.** Harzzusammensetzung nach Anspruch 1, wobei die Polymilchsäure (Komponente B) enthält: Polymilchsäure (Komponente B-1), hauptsächlich bestehend aus L-Milchsäure, und Polymilchsäure (Komponente B-2), hauptsächlich bestehend aus D-Milchsäure, wobei die Komponente B-1 und die Komponente B-2 ein Gewichtsverhältnis (B-1/B-2) von 10/90 bis 90/10 aufweisen.

**3.** Harzzusammensetzung nach Anspruch 1 oder 2, wobei die Polymilchsäure (Komponente B) ein gewichtsmittleres Molekulargewicht von 120.000 oder mehr aufweist.

**4.** Harzzusammensetzung nach einem der Ansprüche 1 bis 3, wobei das Phosphorsäureestermetallsalz (Komponente C) eine Verbindung der folgenden Formel (1) oder (2) ist,

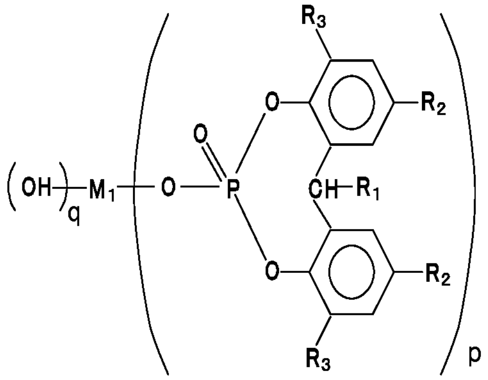

(1)

wobei gilt: $R_1$ ist ein Wasserstoffatom oder eine Alkylgruppe mit 1 bis 4 Kohlenstoffatomen, $R_2$ und $R_3$ sind jeweils unabhängig ein Wasserstoffatom oder eine Alkylgruppe mit 1 bis 12 Kohlenstoffatomen, $M_1$ ist ein Alkalimetallatom, ein Erdalkalimetallatom, ein Zinkatom oder ein Aluminiumatom, p ist 1 oder 2 und q ist 0, wenn $M_1$ ein Alkalimetallatom, ein Erdalkalimetallatom oder ein Zinkatom ist, oder ist 1 oder 2, wenn $M_1$ ein Aluminiumatom ist,

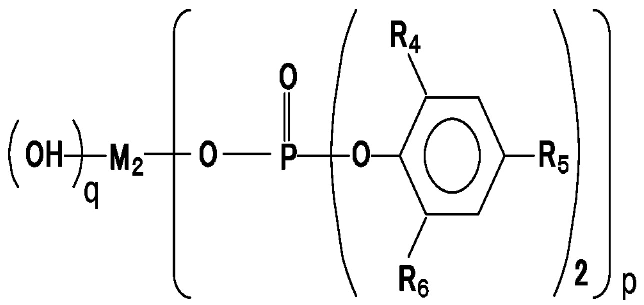

(2)

wobei gilt: $R_4$, $R_5$ und $R_6$ sind jeweils unabhängig ein Wasserstoffatom oder eine Alkylgruppe mit 1 bis 12 Kohlenstoffatomen, $M_2$ ist ein Alkalimetallatom, ein Erdalkalimetallatom, ein Zinkatom oder ein Aluminiumatom, p ist 1 oder 2 und q ist 0, wenn $M_2$ ein Alkalimetallatom, ein Erdalkalimetallatom oder ein Zinkatom ist, oder ist 1 oder 2, wenn $M_2$ ein Aluminiumatom ist.

**5.** Harzzusammensetzung nach einem der Ansprüche 1 bis 4, wobei das Phosphorsäureestermetallsalz (Komponente C) Natrium-2,2'-methylenbis(4,6-di-tert-butylphenyl)phosphat ist.

**6.** Harzzusammensetzung nach einem der Ansprüche 1 bis 5, wobei das Phosphorsäureestermetallsalz (Komponente C) einen durchschnittlichen Teilchendurchmesser, gemessen nach einem statischen Streuverfahren unter Verwendung eines Argonlasers oder Heliumlasers, von 0,01 $\mu$m oder mehr, aber weniger als 10 $\mu$m aufweist.

**7.** Harzzusammensetzung nach einem der Ansprüche 1 bis 6, wobei das Endblockierungsmittel (Komponente F) eine Carbodiimidverbindung ist.

**8.** Harzzusammensetzung nach Anspruch 7, wobei die Carbodiimidverbindung eine aromatische Polycarbodiimidverbindung oder eine aliphatische Polycarbodiimidverbindung ist.

**9.** Harzzusammensetzung nach einem der Ansprüche 1 bis 8, welche 0,001 bis 10 Gewichtsteile pro 100 Gewichtsteile der Harzkomponente eines triklinen anorganischen Keimbildungsmittels (Komponente D) enthält.

**10.** Harzzusammensetzung nach Anspruch 9, wobei das trikline anorganische Keimbildungsmittel (Komponente D) Calciummetasilicat ist.

**11.** Harzzusammensetzung nach Anspruch 10, wobei das trikline anorganische Keimbildungsmittel einen durchschnittlichen Teilchendurchmesser, gemessen nach einem statischen Streuverfahren unter Verwendung eines Argonlasers oder Heliumlasers, von 0,1 $\mu$m oder mehr, aber weniger als 10 $\mu$m aufweist.

**12.** Harzzusammensetzung nach einem der Ansprüche 1 bis 11, welche 0,3 bis 200 Gewichtsteile pro 100 Gewichtsteile der Harzkomponente eines anorganischen Füllstoffs (Komponente E) enthält.

**13.** Harzzusammensetzung nach Anspruch 12, wobei der anorganische Füllstoff (Komponente E) Talk ist.

**14.** Verfahren zur Herstellung der Harzzusammensetzung nach Anspruch 1, welches folgende Stufen umfasst:

(i) das Vermischen von Polymilchsäure (Komponente B-1), bestehend hauptsächlich aus L-Milchsäure, Polymilchsäure (Komponente B-2), bestehend hauptsächlich aus D-Milchsäure, und Phosphorsäureestermetallsalz (Komponente C) und Erhitzen des Gemischs und
(ii) das Vermischen des so erhaltenen Gemisches, eines aromatischen Polycarbonats (Komponente A), eines Endblockierungsmittels (Komponente F) und von Resorcinol-bis(dixylenylphosphat) (Komponente I).

**15.** Geformter Gegenstand, geformt aus der Harzzusammensetzung nach einem der Ansprüche 1 bis 13.

## Revendications

**1.** Composition de résine comprenant

(i) un composant de résine contenant 95 à 5 % en poids d'un polycarbonate aromatique (composant A) et 5 à 95 % en poids de poly(acide lactique) (composant B),
(ii) 0,001 à 10 parties en poids, pour 100 parties en poids du composant de résine, d'un sel de métal d'ester phosphorique (composant C), et
(iii) 0,01 à 5 parties en poids, pour 100 parties en poids du poly(acide lactique) (composant B), d'un agent bloqueur de terminaison (composant F),
(iv) 0,05 à 50 parties en poids, pour 100 parties en poids du composant de résine de bis(phosphate de dixylényle) de résorcinol (composant I),

la teneur en cristal stéréo-complexe (X) de l'expression (I) suivante étant de 80 % ou plus,

$$X\ (\%) = \{\Delta Hb/(\Delta Ha + \Delta Hb)\} \times 100 \quad (I)$$

dans laquelle ΔHa et ΔHb sont une enthalpie de fusion (ΔHa) d'un point de fusion de cristal qui apparaît à moins de 190 °C et une enthalpie de fusion (ΔHb) d'un point de fusion de cristal qui apparaît à 190 °C ou plus mais à moins de 250 °C, respectivement, dans un processus de montée de température par un calorimètre à balayage différentiel (DSC).

**2.** Composition de résine selon la revendication 1, dans laquelle le poly(acide lactique) (composant B) contient du poly(acide lactique) (composant B-1) composé principalement de L-acide lactique et de poly(acide lactique) (composant B-2) composé principalement de D-acide lactique, le composant B-1 et le composant B-2 ayant un rapport en poids (B-1/B-2) de 10/90 à 90/10.

**3.** Composition de résine selon la revendication 1 ou 2, dans laquelle le poly(acide lactique) (composant B) a une masse moléculaire moyenne en masse de 120 000 ou plus.

**4.** Composition de résine selon l'une quelconque des revendications 1 à 3, dans laquelle le sel de métal d'ester phosphorique (composant C) est un composé de formule (1) ou (2) suivante,

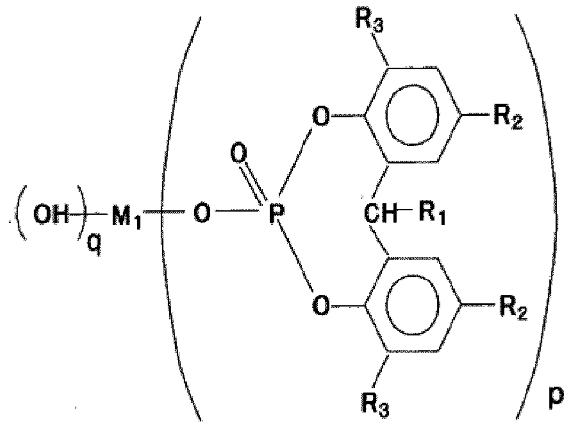

(1)

dans laquelle $R_1$ est un atome d'hydrogène ou un groupe alkyle comportant 1 à 4 atomes de carbone, chacun de $R_2$ et $R_3$ est indépendamment un atome d'hydrogène ou un groupe alkyle comportant 1 à 12 atomes de carbone, $M_1$ est un atome de métal alcalin, un atome de métal alcalinoterreux, un atome de zinc ou un atome d'aluminium, p vaut 1 ou 2, et q vaut 0 lorsque $M_1$ est un atome de métal alcalin, un atome de métal alcalinoterreux ou un atome de zinc, ou vaut 1 ou 2 lorsque $M_1$ est un atome d'aluminium,

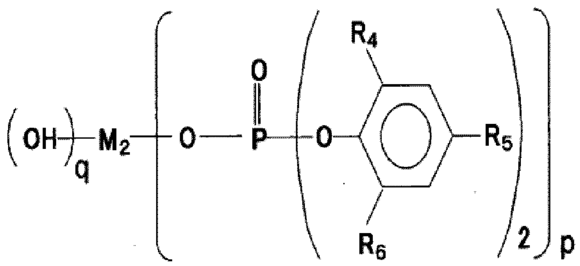

(2)

dans laquelle chacun de $R_4$, $R_5$ et $R_6$ est indépendamment un atome d'hydrogène ou un groupe alkyle comportant 1 à 12 atomes de carbone, $M_2$ est un atome de métal alcalin, un atome de métal alcalinoterreux, un atome de zinc ou un atome d'aluminium, p vaut 1 ou 2, et q vaut 0 lorsque $M_2$ est un atome de métal alcalin, un atome de métal alcalinoterreux ou un atome de zinc, ou vaut 1 ou 2 lorsque $M_2$ est un atome d'aluminium.

**5.** Composition de résine selon l'une quelconque des revendications 1 à 4, dans laquelle le sel de métal d'ester phosphorique (composant C) est le 2,2'-méthylènebis(4,6-di-tert-butylphényl) phosphate de sodium.

**6.** Composition de résine selon l'une quelconque des revendications 1 à 5, dans laquelle le sel de métal d'ester phosphorique (composant C) a un diamètre moyen de particule mesuré par un procédé de diffusion statique utilisant un laser à argon ou un laser à hélium de 0,01 μm ou plus mais de moins de 10 μm.

**7.** Composition de résine selon l'une quelconque des revendications 1 à 6, dans laquelle l'agent bloqueur de terminaison (composant F) est un composé carbodiimide.

**8.** Composition de résine selon la revendication 7, dans laquelle le composé carbodiimide est un composé polycarbodiimide aromatique ou un composé polycarbodiimide aliphatique.

**9.** Composition de résine selon l'une quelconque des revendications 1 à 8, qui contient 0,001 à 10 parties en poids, pour 100 parties en poids du composant de résine, d'un agent de nucléation inorganique triclinique (composant D).

**10.** Composition de résine selon la revendication 9, dans laquelle l'agent de nucléation inorganique triclinique (composant D) est le métasilicate de calcium.

**11.** Composition de résine selon la revendication 10, dans laquelle l'agent de nucléation inorganique triclinique a un diamètre moyen de particule mesuré par un procédé de diffusion statique utilisant un laser à argon ou un laser à hélium de 0,1 μm ou plus mais de moins de 10 μm.

**12.** Composition de résine selon l'une quelconque des revendications 1 à 11, qui contient 0,3 à 200 parties en poids, pour 100 parties en poids du composant de résine, d'une charge inorganique (composant E).

**13.** Composition de résine selon la revendication 12, dans laquelle la charge inorganique (composant E) est du talc.

**14.** Processus de production de la composition de résine précisée dans la revendication 1, qui comprend les étapes de

(i) mélangeage de poly(acide lactique) (composant B-1) composé principalement de L-acide lactique, de poly(acide lactique) (composant B-2) composé principalement de D-acide lactique et de sel de métal d'ester phosphorique (composant C) et chauffage du mélange, et
(ii) mélangeage du mélange ainsi obtenu, d'un polycarbonate aromatique (composant A), d'un agent bloqueur de terminaison (composant F) et de bis(phosphate de dixylényle) de résorcinol (composant I).

**15.** Article moulé formé de la composition de résine précisée dans l'une quelconque des revendications 1 à 13.

Fig. 1

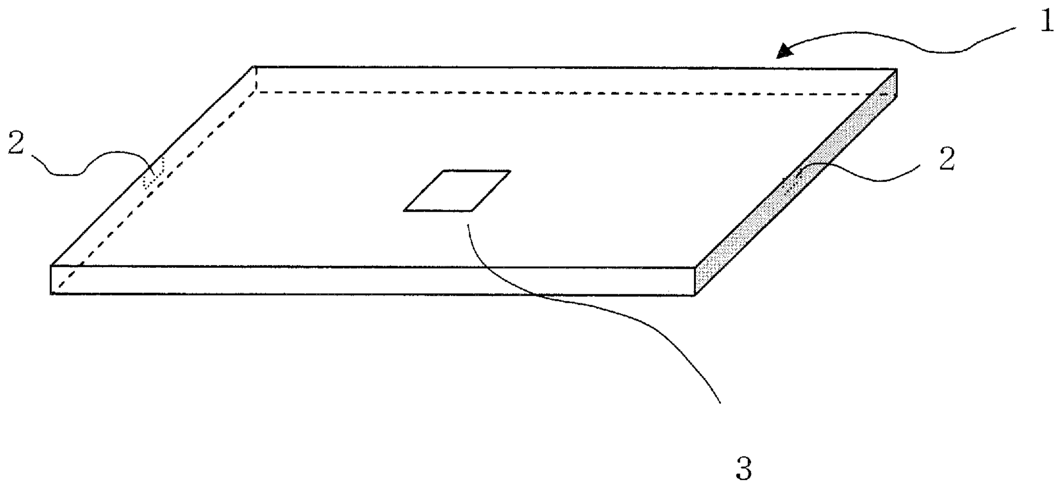

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2007191630 A
- WO 2008102919 A1
- WO 2007083820 A1
- JP 63241024 A
- JP 3583097 B
- JP 7506863 A
- JP 3279768 B
- JP 2005048066 A
- JP 2005048067 A
- JP 2004190026 A
- JP 6172508 A
- JP 8027370 A
- JP 2001055435 A
- JP 2002117580 A
- US 2941956 A
- JP 47033279 B


### Non-patent literature cited in the description


- *Macromolecules,* 1991, vol. 24, 5651
- *J. Org. Chem.,* 1963, vol. 28, 2069-2075
- *Chemical Review,* 1981, vol. 81 (4), 619-621